# FASCICULE DE BREVET EUROPEEN

(11) **EP 3 727 826 B1**
(45) Date de publication et mention de la délivrance du brevet: **12.07.2023**
(21) Numéro de dépôt: 18833933.7
(22) Date de dépôt: 13.12.2018
(51) Int. Cl.: B29D 30/40, B29D 30/38, D02G 3/48, D06M 15/693, B60C 9/00

(54) **PROCÉDÉ DE FABRICATION D'UN ÉLÉMENT FILAIRE DE RENFORT**
VERFAHREN ZUR HERSTELLUNG EINES FADENFÖRMIGEN VERSTÄRKUNGSELEMENTES
METHOD FOR PRODUCING A THREADLIKE REINFORCEMENT ELEMENT

(30) Priorité: 22.12.2017 FR 1763117
(43) Date de publication de la demande: 28.10.2020
(73) Titulaire: COMPAGNIE GENERALE DES ETABLISSEMENTS MICHELIN, 63000 Clermont-Ferrand (FR)
(72) Inventeur: RIH, Sabrina, 63040 Clermont-Ferrand Cedex 9 (FR); CORNILLE, Richard, 63040 Clermont-Ferrand Cedex 9 (FR)
(74) Mandataire: Louret, Sylvain
(86) Numéro de dépôt international: PCT/FR2018/053273
(87) Numéro de publication internationale: WO 2019/122621

(56) Documents cités:
- EP-A1- 0 133 205
- WO-A1-03/060212
- WO-A1-2009/052844
- US-A- 3 495 646
- US-A- 3 938 313
- US-A1- 2007 148 454
- US-A1- 2013 146 198
- US-A1- 2016 152 083
- US-A1- 2016 303 914

## Description

L'invention concerne les pneumatiques et préférentiellement ceux pour véhicules de tourisme, mais peut être utilisée sur tout autre type de véhicule tels que des véhicules à deux roues, des véhicules poids lourds, agricoles, de génie civil ou des avions ou, plus généralement, sur tout dispositif roulant. Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale.

On connait de l'état de la technique des pneumatiques comprenant un sommet et deux flancs. Ces pneumatiques comprennent classiquement une armature de carcasse ancrée dans deux bourrelets et surmontée radialement par une armature de sommet elle-même surmontée radialement d'une bande de roulement, l'armature de sommet étant réunie auxdits bourrelets par les deux flancs. L'armature de carcasse comprend une unique nappe de carcasse comprenant des éléments filaires de renfort de carcasse. L'armature de sommet comprend une armature de travail comprenant deux nappes de travail comprenant des éléments filaires de renfort de travail, les éléments filaires de renfort de travail des deux nappes faisant des angles avec la direction circonférentielle du pneumatique d'orientations opposées d'une nappe de travail à l'autre. L'armature de sommet comprend également une armature de frettage comprenant une unique nappe de frettage comprenant des éléments filaires textiles de renfort de frettage.

Les éléments filaires de renfort de carcasse et de travail sont agencés de façon à définir, dans le sommet, un maillage triangulaire.

D'une part, l'armature de frettage doit permettre, grâce à des propriétés à cuit de résistance mécanique adaptées, d'exercer une force de frettage suffisante du sommet du pneumatique, notamment lors du roulage à des vitesses élevées afin de garantir le maintien du profil du pneumatique. D'autre part, l'armature de frettage doit permettre, grâce à des propriétés à cru de module en traction adaptées, une expansion radiale et donc, un allongement circonférentiel, du sommet du pneumatique de façon à ne pas empêcher les déformations radiales et circonférentielles imposées au pneumatique lors de son procédé de fabrication, notamment lors de la cuisson du pneumatique durant laquelle le pneumatique est expansé radialement et circonférentiellement, par exemple par mise sous pression d'une membrane de gonflage, de façon à être plaqué contre les surfaces du moule de cuisson.

Un tel pneumatique est notamment décrit dans US6799618. Du fait de la présence de deux nappes de travail, les éléments filaires textiles de renfort de frettage présentent des propriétés mécaniques, notamment un module tangent, relativement faibles aussi bien à cru avant l'étape de fabrication de la nappe de frettage qu'à cuit une fois extrait du pneumatique, et ce quel que soit l'allongement imposé. Ainsi, la nappe de frettage de US6799618 garantit la possibilité de déformer radialement et circonférentiellement le pneumatique lors de son procédé de fabrication mais en sacrifiant les propriétés mécaniques de la nappe de frettage et donc de l'armature de sommet.

On connait de WO2016/166056 un pneumatique dans lequel l'armature de travail comprend une unique nappe de travail. Ainsi, on allège l'armature de sommet du pneumatique. Dans ce pneumatique, le maillage triangulaire est assuré par l'agencement particulier, dans le sommet, des éléments filaires de renfort de carcasse, de travail et de frettage. Dans WO2016/166056, du fait de la suppression d'une nappe de travail, la nappe de frettage comprend des éléments filaires textiles de renfort de frettage présentant un module tangent relativement élevé, que ce soit à cru avant l'étape de fabrication de la nappe de frettage ou bien à cuit une fois extrait du pneumatique, et ce afin de compenser la suppression d'une des nappes de travail. Ainsi, de tels éléments filaires textiles de renfort de frettage, s'ils assurent les propriétés de résistance mécanique du sommet, ne confèrent toutefois pas une endurance suffisante à l'armature de frettage. Cette endurance est d'autant plus nécessaire que, dans le cas d'une armature de sommet ne comprenant qu'une unique nappe de travail, la nappe de frettage est censée apporter à l'armature de sommet une partie de l'endurance perdue par la suppression d'une des nappes de travail.

Le document de brevet US 3 495 646 A divulgue des caractéristiques similaires au préambule de la revendication indépendante 1.

L'invention a pour but un procédé permettant de fabriquer un élément filaire textile de renfort adhérisé dans lequel on peut maximiser l'endurance et le module de l'élément filaire textile de renfort adhérisé indépendamment l'un de l'autre.

A cet effet, l'invention a pour objet un procédé de fabrication d'un élément filaire textile de renfort adhérisé comprenant :
- une âme constituée d'un premier brin comprenant au moins un monofilament, et
- une couche comprenant au moins deux deuxièmes brins, chaque deuxième brin de la couche comprenant au moins un monofilament, chaque deuxième brin de la couche étant enroulé en hélice autour de l'âme,

procédé dans lequel
   - on assemble le premier brin de l'âme et les deuxièmes brins de la couche de façon à former un élément filaire textile de renfort écru,
   - on obtient l'élément filaire de renfort écru ou un élément filaire de renfort pré-adhérisé,
   - on revêt l'élément filaire textile de renfort écru ou pré-adhérisé d'une couche externe d'au moins une composition adhésive thermoréticulable,
   - on traite thermiquement l'élément filaire textile de renfort écru ou pré-adhérisé revêtu de la couche externe de façon à réticuler la composition adhésive pour obtenir l'élément filaire textile de renfort adhérisé,
procédé dans lequel on met en oeuvre les étapes de revêtement par et de traitement thermique de la couche externe de l'élément filaire textile de renfort écru ou pré-adhérisé de façon à, pour un allongement égal à 30% de l'allongement à rupture de l'élément filaire textile de renfort écru, augmenter le module tangent de l'élément filaire textile de renfort adhérisé par rapport au module tangent de l'élément filaire textile de renfort écru.

Les inventeurs à l'origine de l'invention ont découvert, de façon surprenante, qu'en appliquant un procédé spécifique à un élément filaire de renfort présentant une structure spécifique comprenant une âme et une couche, il était possible d'améliorer l'endurance de l'élément filaire de renfort adhérisé indépendamment de la variation de son module. En effet, la structure spécifique de l'élément filaire est telle que plus l'élément filaire textile de renfort écru présente un module tangent faible, meilleure est son endurance, indépendamment des paramètres des étapes de revêtement et de traitement thermique qu'on lui appliquera. Ainsi, pour un élément filaire textile de renfort écru donné, on pourra faire varier les paramètres des étapes de revêtement et de traitement thermique de façon à augmenter, comme on le souhaite, son module une fois à l'état adhérisé sans que l'on risque d'obtenir un élément filaire textile de renfort adhérisé présentant une mauvaise endurance, cette dernière étant uniquement conditionnée par l'élément filaire textile de renfort écru. A l'inverse, pour un élément filaire textile de renfort adhérisé dont on souhaite qu'il présente un module donné, on pourra partir d'un élément filaire textile de renfort écru quelconque, le plus bas le module de l'élément filaire textile de renfort écru est, meilleure est l'endurance de l'élément filaire textile de renfort adhérisé.

En diminuant le module tangent de l'élément filaire textile de renfort adhérisé par rapport au module tangent de l'élément filaire textile de renfort écru, on obtiendrait non seulement un élément filaire textile de renfort adhérisé présentant un module plus faible que le module de l'élément filaire textile de renfort écru mais surtout une endurance plus faible que si l'on était parti d'un élément filaire textile de renfort écru présentant un module plus faible et que l'on avait augmenté le module pour obtenir l'élément filaire textile de renfort adhérisé. Dans ce cas non couvert par l'invention et contrairement au but poursuivi par l'invention, on ne maximiserait donc ni le module ni l'endurance.

Un élément filaire textile écru est tel que le ou les matériaux textiles constituants l'élément filaire textile sont issus de fabrication sans qu'aucun revêtement ayant une fonction d'adhésion ne vienne recouvrir ce ou ces matériaux. Ainsi, un élément filaire textile écru peut être nu, c'est-à-dire que le ou les matériaux textiles constituants l'élément filaire textile ne sont revêtus d'aucun revêtement ou bien éventuellement être ensimé, c'est-à-dire revêtu d'une composition d'ensimage ayant notamment pour fonctions de faciliter le glissement du ou des matériaux textiles constituants l'élément filaire textile lors de son procédé de fabrication et d'éviter l'accumulation des charges électrostatiques.

Un élément filaire textile pré-adhérisé est tel que le ou les matériaux textiles constituants l'élément filaire textile sont directement revêtus d'une couche intermédiaire d'une composition destinée à favoriser l'adhésion entre le ou les matériaux textiles constituants l'élément filaire textile et une couche externe d'une composition qui elle, est destinée à assurer l'adhésion entre l'élément filaire textile pré-adhérisé et la matrice dans laquelle sera noyé l'élément filaire textile une fois ce dernier adhérisé. La couche intermédiaire de composition de l'élément filaire textile pré-adhérisé ne peut pas assurer à elle seule, une adhésion de la même qualité que la couche externe. Une couche intermédiaire est avantageusement utilisée dans le cas de matériaux textiles relativement apolaires, par exemple dans le cas des polyamides aromatiques.

Un élément filaire textile adhérisé est tel que le ou les matériaux textiles constituants l'élément filaire textiles sont directement ou indirectement (dans le cas d'un élément filaire textile pré-adhérisé) revêtu d'une couche externe destinée à assurer l'adhésion entre l'élément filaire textile écru ou pré-adhérisé et la matrice.

Un élément filaire textile de renfort présentant une structure conforme à l'invention est couramment désigné par les termes anglais « Core Insertion ». Ainsi, l'âme centrale est insérée au milieu des deuxièmes brins de la couche qui lui sont donc périphériques et adjacents. Chaque deuxième brin de la couche est enroulé autour de l'âme sans être enroulé autour du ou des autres deuxièmes brins de la couche.

Une telle structure de l'élément filaire textile de renfort permet d'obtenir des propriétés mécaniques avantageuses. En effet, lorsque l'élément filaire textile de renfort est sollicité aux faibles allongements, le module de l'élément filaire textile de renfort reste relativement faible, ce dernier étant alors gouverné par l'âme constitué d'un seul premier brin. Les deuxièmes brins de la couche étant enroulés en hélice, ceux-ci ne contribuent pas à augmenter la valeur du module aux faibles allongements car l'effort est absorbé par la déformation géométrique de l'hélice. Lorsque l'élément filaire textile de renfort est sollicité à de plus grands allongements, l'hélice des deuxièmes brins de la couche ayant été consommée par l'allongement, ceux-ci contribuent fortement à l'augmentation du module en plus de la contribution de l'âme.

D'autre part, une telle structure de l'élément filaire textile de renfort permet d'obtenir, indépendamment de son procédé de fabrication, une endurance déjà bien supérieure à celle d'un élément filaire textile hybride classique tel que décrit dans WO2016/166056. En effet, l'élément filaire textile de type « Core insertion » tel que décrit ci-dessus présente une excellente endurance. Les inventeurs émettent l'hypothèse que, lors de la mise en compression d'un élément filaire textile hybride classique tel que décrit dans WO2016/166056, les monofilaments d'aramide s'endommagent et voient leur force à rupture diminuer de sorte que, sous l'effet des sollicitations répétées, notamment lors d'une mise en tension ultérieure, on augmente significativement le risque de rupture par rapport à avant leur mise en compression. Lors de la mise en compression d'un élément filaire textile type « Core Insertion » tel que décrit ci-dessus, le ou les monofilaments qui subissent le plus de compression sont ceux de l'âme, monofilaments qui, s'ils sont judicieusement choisis, présentent une structure moléculaire moins orientée leur conférant une bonne résistance aux sollicitations en compression. De plus, lors d'une mise en compression d'un élément filaire textile type « Core Insertion » tel que décrit ci-dessus, le ou les monofilaments des brins de couche disposent de davantage de degrés de liberté par rapport aux monofilaments d'aramide d'un élément filaire textile hybride classique tel que décrit dans WO2016/166056. Ainsi, le ou les monofilaments des brins de couche s'agencent de façon à s'adapter à la sollicitation mécanique, de sorte qu'ils s'endommagent moins et conservent une force à rupture plus élevée, leur permettant de casser moins facilement sous l'effet des sollicitations répétées de l'élément filaire textile.

Par filaire, on entend un élément de renfort s'étendant longitudinalement selon un axe principal et présentant une section perpendiculaire à l'axe principal dont la plus grande dimension D est relativement faible par rapport à la dimension L selon l'axe principal. Par relativement faible, on entend que L/D est supérieur ou égal à 100, de préférence supérieur ou égal à 1000. Cette définition couvre aussi bien les éléments de renfort filaires de section circulaire que les éléments de renfort filaires de section non circulaire, par exemple de section polygonale ou oblongue. Dans le cas d'éléments de renfort filaires de section non circulaire, le rapport de la plus grande dimension D de la section sur la plus petite dimension d de la section est supérieur ou égal à 20, de préférence supérieur ou égal à 30 et plus préférentiellement supérieur ou égal à 50.

Par textile, on entend que l'élément filaire n'est pas métallique. En d'autres termes, l'élément filaire est constitué d'un ou de plusieurs matériaux non métalliques, Des exemples de tels matériaux non métalliques sont les matériaux organiques, notamment les matériaux polymériques, et les matériaux minéraux telles que le carbone ou le verre.

Dans la description et les revendications, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

Par l'expression "partie en poids pour cent parties en poids d'élastomère" (ou pce), il faut entendre au sens de la présente invention, la partie, en masse pour cent parties en masse d'élastomère.

Par direction axiale, on entend la direction sensiblement parallèle à l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique e).

Par direction radiale, on entend la direction selon un rayon du pneumatique, c'est-à-dire une direction quelconque intersectant l'axe de rotation du pneumatique et sensiblement perpendiculairement à cet axe.

Par plan médian (noté M), on entend le plan perpendiculaire à l'axe de rotation du pneumatique qui est situé à mi-distance des deux bourrelets et passe par le milieu de l'armature de sommet.

Par plan circonférentiel équatorial (noté E), on entend le plan théorique passant par l'équateur du pneumatique, perpendiculaire au plan médian et à la direction radiale. L'équateur du pneumatique est, dans un plan de coupe circonférentielle (plan perpendiculaire à la direction circonférentielle et parallèle aux directions radiale et axiales) l'axe parallèle à l'axe de rotation du pneumatique et située à équidistance entre le point radialement le plus externe de la bande de roulement destiné à être au contact avec le sol et le point radialement le plus interne du pneumatique destiné à être en contact avec un support, par exemple une jante, la distance entre ces deux points étant égale à H.

Les mesures des torsions N1, N1' et N2 peuvent être réalisées par toute méthode connue par l'homme du métier, par exemple conformément à la norme ASTM D 885/D 885M - 10a de 2014 (paragraphe 30), par exemple à l'aide d'un torsiomètre.

Le titre (ou densité linéique) de chaque brin est déterminé selon la norme ASTM D 885/D 885M - 10a de 2014. Le titre est donné en tex (poids en grammes de 1000 m de produit - rappel: 0, 111 tex égal à 1 denier).

Le module tangent, exprimé en cN/tex/% est calculé à partir d'une courbe force-allongement obtenue en appliquant la norme ASTM D 885/D 885M - 10a de 2014. De cette courbe force-allongement, on déduit le module tangent en calculant la dérivée de la courbe en chaque point. Dans le cas de l'élément filaire textile de renfort adhérisé, le module tangent est mesuré par exemple directement avant l'étape de noyage de l'élément filaire textile de renfort dans la nappe dans laquelle il est destiné à être noyé, c'est-à-dire sans qu'aucune autre étape ne modifiant les propriétés de module tangent n'ait lieu entre sa dernière étape de traitement thermique et l'étape de noyage.

L'allongement à rupture et la force à rupture d'un élément filaire textile sont mesurés selon la norme ASTM D 885/D 885M - 10a de 2014. L'allongement à rupture d'une nappe est égal à l'allongement à rupture des éléments filaires textiles qu'elle comprend.

Par nappe, on entend l'assemblage, d'une part, de plusieurs éléments filaires de renfort et, d'autre part, d'une matrice élastomérique, les éléments filaires de renfort étant noyés dans la matrice élastomérique.

Le module sécant en traction d'une nappe pour une force égale à 15% de la force à rupture est notée MA₁₅ et est exprimé en daN/mm. On calcule le module MA₁₅ à partir d'une courbe force-allongement obtenue en appliquant la normeASTM D 885/D 885M - 10a de 2014 à un élément filaire textile de renfort de la nappe. On calcule le module sécant en traction de l'élément filaire textile de renfort en déterminant la pente de la droite tracée entre les points (0,0) et le point de la courbe présentant une ordonnée égale à 15% de la force à rupture. On détermine le module MA₁₅ en multipliant le module sécant en traction de l'élément filaire textile de renfort par le nombre d'éléments filaires textiles de renfort par mm de nappe, ce nombre étant déterminé selon une direction perpendiculaire à la direction selon laquelle les éléments filaires textiles de renfort s'étendent dans la nappe.

On calcule la force à rupture d'une nappe à partir d'une courbe force-allongement obtenue en appliquant la norme ASTM D 885/D 885M - 10a de 2014 à un élément filaire textile de renfort de la nappe. On détermine la force à rupture de la nappe en multipliant la force à rupture de l'élément filaire textile de renfort par le nombre d'éléments filaires textiles de renfort par mm de nappe, ce nombre étant déterminé selon une direction perpendiculaire à la direction selon laquelle les éléments filaires textiles de renfort s'étendent dans la nappe.

Par orientation d'un angle, on entend le sens, horaire ou anti-horaire, dans lequel il faut tourner à partir d'une droite de référence, ici la direction circonférentielle du pneumatique, définissant l'angle pour atteindre l'autre droite définissant l'angle.

On calcule la raideur en traction à 1% d'allongement d'un brin à partir d'une courbe force-allongement obtenue en appliquant la norme ASTM D 885/D 885M - 10a de 2014 au brin auquel on applique une torsion de 100 tours/mètre. On calcule la raideur en traction du brin en déterminant la pente de la droite tracée entre le point de la courbe correspondant une force égale à la prétension standard de 0,5 cN/tex et le point de la courbe présentant une abscisse égale à 1 % d'allongement.

Dans un premier mode de réalisation du procédé selon l'invention :
- on revêt l'élément filaire textile de renfort écru de la couche externe de la composition adhésive thermoréticulable,
- on traite thermiquement l'élément filaire textile de renfort écru revêtu de la couche externe de façon à réticuler la composition adhésive pour obtenir l'élément filaire textile de renfort adhérisé,
procédé dans lequel on met en oeuvre les étapes de revêtement par et de traitement thermique de la couche externe de l'élément filaire textile de renfort écru de façon à, pour un allongement égal à 30% de l'allongement à rupture de l'élément filaire textile de renfort écru, augmenter le module tangent de l'élément filaire textile de renfort adhérisé par rapport au module tangent de l'élément filaire textile de renfort écru.

Dans ce premier mode de réalisation, l'élément filaire textile de renfort écru est recouvert d'une seule couche d'adhésion. Cette couche externe revêt directement l'élément filaire textile de renfort écru, c'est-à-dire que la couche externe est au contact du ou des monofilaments textiles de l'élément filaire textile de renfort.

Dans un deuxième mode de réalisation du procédé selon l'invention :
- on revêt l'élément filaire textile de renfort écru d'une couche intermédiaire d'une première composition adhésive thermoréticulable,
- on traite thermiquement l'élément filaire textile de renfort écru revêtu de la couche intermédiaire de façon à réticuler la première composition adhésive pour obtenir l'élément filaire textile de renfort pré-adhérisé,
- on revêt l'élément filaire textile de renfort pré-adhérisé de la couche externe d'une deuxième composition adhésive thermoréticulable,
- on traite thermiquement l'élément filaire textile de renfort pré-adhérisé revêtu de la couche externe de façon à réticuler la deuxième composition adhésive pour obtenir l'élément filaire textile de renfort adhérisé,
procédé dans lequel on met en oeuvre les étapes de revêtement par et de traitement thermique de la couche externe de l'élément filaire textile de renfort pré-adhérisé de façon à, pour un allongement égal à 30% de l'allongement à rupture de l'élément filaire textile de renfort écru, augmenter le module tangent de l'élément filaire textile de renfort adhérisé par rapport au module tangent de l'élément filaire textile de renfort écru.

Dans ce deuxième mode de réalisation, l'élément filaire textile de renfort écru est recouvert de deux couches d'adhésion. Une couche intermédiaire revêt directement l'élément filaire textile de renfort écru, c'est-à-dire que la couche intermédiaire est au contact du ou des monofilaments textiles de l'élément filaire textile de renfort. La couche externe revêt directement la couche intermédiaire, c'est-à-dire que la couche externe est au contact de la couche intermédiaire.

Dans un mode de réalisation, on augmente le module tangent de l'élément filaire textile de renfort adhérisé en appliquant, lors de l'étape de traitement thermique de la couche externe, une tension de traitement T_{T2} supérieure à une pré-tension standard à l'élément filaire textile. De façon bien connue de l'homme du métier des éléments filaires textiles de renfort, la prétension standard est égale 0,5 cN/tex.

Les inventeurs à l'origine de l'invention ont découvert que la tension T_{T2} appliquée à l'élément filaire textile de renfort écru ou pré-adhérisé permettait d'augmenter le module tangent, notamment pour des allongements élevés. Avantageusement, la tension est relativement simple à contrôler soit directement, soit en contrôlant la vitesse. L'homme du métier adaptera la tension à appliquer en fonction du décalage souhaité, notamment en fonction du compromis entre le module et la déformabilité de l'élément filaire textile de renfort adhérisé qu'il recherche.

Avantageusement, l'âme présentant un titre Ta, on augmente le module tangent de l'élément filaire textile de renfort adhérisé en appliquant, lors de l'étape de traitement thermique de la couche externe une tension de traitement T_{T2} telle que T_{T2}/Ta ≥ 3 cN/tex, de préférence T_{T2}/Ta ≥ 6 cN/tex, plus préférentiellement T_{T2}/Ta ≥ 10 cN/tex et encore plus préférentiellement T_{T2}/Ta ≥ 20 cN/tex. Par titre Ta, on entend le titre du premier brin d'âme, que le premier brin d'âme soit constitué d'un ou de plusieurs filés. Pour des faibles tensions appliquées à l'élément filaire textile de renfort, l'âme est davantage sollicitée que la couche de sorte qu'il suffit d'appliquer une tension supérieure à un seuil relativement faible pour augmenter le module tangent. Par ailleurs, les inventeurs ont noté que plus la tension était élevée, plus le module tangent était augmenté.

Avantageusement, la couche présentant un titre Tc, on augmente le module tangent de l'élément filaire textile de renfort adhérisé en appliquant, lors de l'étape de traitement thermique de la couche externe une tension de traitement T_{T2} telle que T_{T2}/Tc ≤ 10 cN/tex, de préférence T_{T2}/Ta ≤ 7 cN/tex, plus préférentiellement T_{T2}/Ta ≤ 5 cN/tex et encore plus préférentiellement T_{T2}/Ta ≤ 4 cN/tex. Par titre Tc, on entend la somme des titres des deuxièmes brins de la couche, que chaque deuxième brin de la couche soit constitué d'un ou de plusieurs filés. Pour des tensions appliquées à l'élément filaire textile de renfort plus élevées, la couche est alors sollicitée à son tour de sorte qu'il est préférable de ne pas dépasser une tension trop importante d'une part, pour ne pas risquer de rompre l'âme, et d'autre part, pour ne pas trop solliciter la couche, notamment dans le cas où les deuxièmes brins de couche sont réalisés dans des matériaux sensibles à une sollicitation trop élevée.

Pour les mêmes raisons que celles évoquées ci-dessus, dans le deuxième mode de réalisation, on applique avantageusement, lors de l'étape de traitement thermique de la couche intermédiaire, une tension de traitement T_{T1} telle que T_{T1}/Tc ≤ 10 cN/tex, de préférence T_{T1}/Ta ≤ 7 cN/tex, plus préférentiellement T_{T1}/Ta ≤ 5 cN/tex et encore plus préférentiellement T_{T1}/Ta ≤ 4 cN/tex.

Avantageusement, on met en oeuvre les étapes de revêtement par et de traitement thermique de la couche externe de l'élément de renfort écru ou pré-adhérisé de façon à, pour tout allongement supérieur ou égal à 30% de l'allongement à rupture de l'élément filaire textile de renfort écru, augmenter le module tangent de l'élément filaire textile de renfort adhérisé par rapport au module tangent de l'élément filaire textile de renfort écru correspondant à un même allongement. Ainsi, on s'assure que tous les modules tangents correspondants à des allongements supérieurs ou égaux à 30% de l'allongement à rupture de l'élément filaire textile de renfort écru sont augmentés.

Dans un mode de réalisation, on met en oeuvre les étapes de revêtement par et de traitement thermique de la couche externe de l'élément de renfort écru ou pré-adhérisé de façon à, pour un allongement égal à 20% de l'allongement à rupture de l'élément filaire textile de renfort écru, augmenter le module tangent de l'élément filaire textile de renfort adhérisé par rapport au module tangent de l'élément filaire textile de renfort écru. Ici, on augmente avantageusement les modules tangents pour des allongements relativement petits. On permet ainsi d'augmenter davantage le module et ce pour des allongements relativement faibles.

Avantageusement, on met en oeuvre les étapes de revêtement par et de traitement thermique de la couche externe de l'élément de renfort écru ou pré-adhérisé de façon à, pour tout allongement supérieur ou égal à 20% de l'allongement à rupture de l'élément filaire textile de renfort écru, augmenter le module tangent de l'élément filaire textile de renfort adhérisé par rapport au module tangent de l'élément filaire textile de renfort écru correspondant à un même allongement. Ainsi, on s'assure que tous les modules tangents correspondants à des allongements supérieurs ou égaux à 20% de l'allongement à rupture de l'élément filaire textile de renfort écru sont augmentés.

Dans des modes de réalisation préférés, l'élément filaire textile de renfort adhérisé présentant un allongement à rupture supérieur ou égal à 6 % et l'élément filaire textile de renfort écru présentant un allongement à rupture supérieur ou égal à 6 %, on met en oeuvre les étapes de revêtement par et de traitement thermique de la couche externe de l'élément de renfort écru ou pré-adhérisé de façon à augmenter le module tangent à 6 % d'allongement de l'élément filaire textile de renfort adhérisé par rapport au module tangent à 6 % d'allongement de l'élément filaire textile de renfort écru.

De préférence, on met en oeuvre les étapes de revêtement par et de traitement thermique de la couche externe de l'élément de renfort écru ou pré-adhérisé de façon à, pour tout allongement allant de 6 % à l'allongement à rupture de l'élément filaire textile de renfort écru, augmenter le module tangent de l'élément filaire textile de renfort adhérisé par rapport au module tangent de l'élément filaire textile de renfort écru correspondant à un même allongement. Ainsi, on s'assure que tous les modules tangents correspondants à des allongements supérieurs ou égaux à 6 % de l'allongement à rupture de l'élément filaire textile de renfort écru sont augmentés.

Dans des modes de réalisation préférés, l'élément filaire textile de renfort adhérisé présentant un allongement à rupture supérieur ou égal à 4 % et l'élément filaire textile de renfort écru présentant un allongement à rupture supérieur ou égal à 4 %, on met en oeuvre les étapes de revêtement par et de traitement thermique de la couche externe de l'élément de renfort écru ou pré-adhérisé de façon à augmenter le module tangent à 4 % d'allongement de l'élément filaire textile de renfort adhérisé par rapport au module tangent à 4 % d'allongement de l'élément filaire textile de renfort écru.

De préférence, on met en oeuvre les étapes de revêtement et de traitement thermique de la couche externe de l'élément de renfort écru ou pré-adhérisé de façon à, pour tout allongement allant de 4 % à l'allongement à rupture de l'élément filaire textile de renfort écru, augmenter le module tangent de l'élément filaire textile de renfort adhérisé par rapport au module tangent de l'élément filaire textile de renfort écru correspondant à un même allongement. Ainsi, on s'assure que tous les modules tangents correspondants à des allongements supérieurs ou égaux à 4 % de l'allongement à rupture de l'élément filaire textile de renfort écru sont augmentés.

Dans des modes de réalisation préférés, l'élément filaire textile de renfort adhérisé présentant un allongement à rupture supérieur ou égal à 2 % et l'élément filaire textile de renfort écru présentant un allongement à rupture supérieur ou égal à 2 %, on met en oeuvre les étapes de revêtement par et de traitement thermique de la couche externe de l'élément de renfort écru ou pré-adhérisé de façon à augmenter le module tangent à 2 % d'allongement de l'élément filaire textile de renfort adhérisé par rapport au module tangent à 2 % d'allongement de l'élément filaire textile de renfort écru.

De préférence, on met en oeuvre les étapes de revêtement par et de traitement thermique de la couche externe de l'élément de renfort écru ou pré-adhérisé de façon à, pour tout allongement allant de 2 % à l'allongement à rupture de l'élément filaire textile de renfort écru, augmenter le module tangent de l'élément filaire textile de renfort adhérisé par rapport au module tangent de l'élément filaire textile de renfort écru correspondant à un même allongement. Ainsi, on s'assure que tous les modules tangents correspondants à des allongements supérieurs ou égaux à 2 % de l'allongement à rupture de l'élément filaire textile de renfort écru sont augmentés.

### Elément filaire textile de renfort écru

Comme expliqué ci-dessus, les inventeurs à l'origine de l'invention ont découvert que plus le module tangent de l'élément filaire textile écru était faible, meilleure était l'endurance, et ce d'autant plus que le module tangent de l'élément filaire textile écru était faible pour des allongements importants.

Ainsi, avantageusement, l'élément filaire textile de renfort écru présente un module tangent inférieur ou égal à 3 cN/tex/% pour tout allongement inférieur ou égal à 2 %, de préférence pour tout allongement inférieur ou égal à 3 %, plus préférentiellement pour tout allongement inférieur ou égal à 4 % et encore plus préférentiellement pour tout allongement inférieur ou égal à 5 %. De façon préférée, l'élément filaire textile de renfort écru présente un module tangent inférieur ou égal à 3 cN/tex/% pour tout allongement inférieur ou égal à 6 %, de préférence pour tout allongement inférieur ou égal à 7 %, plus préférentiellement pour tout allongement inférieur ou égal à 8 % et encore plus préférentiellement pour tout allongement inférieur ou égal à 9 %.

Avantageusement, l'élément filaire textile écru de renfort présente un module tangent inférieur ou égal à 5 cN/tex/% pour tout allongement inférieur ou égal à 3 %, de préférence pour tout allongement inférieur ou égal à 4,5 %, plus préférentiellement pour tout allongement inférieur ou égal à 5,5 % et encore plus préférentiellement pour tout allongement inférieur ou égal à 6,5 %. De façon préférée, l'élément filaire textile de renfort écru présente un module tangent inférieur ou égal à 5 cN/tex/% pour tout allongement inférieur ou égal à 7,5 %, de préférence pour tout allongement inférieur ou égal à 8,5 %, plus préférentiellement pour tout allongement inférieur ou égal à 9,5 % et encore plus préférentiellement pour tout allongement inférieur ou égal à 10,5 %.

Avantageusement, l'élément filaire textile de renfort écru présente un module tangent inférieur ou égal à 10 cN/tex/% pour tout allongement inférieur ou égal à 5 %, de préférence pour tout allongement inférieur ou égal à 6,5 %, plus préférentiellement pour tout allongement inférieur ou égal à 7,5 % et encore plus préférentiellement pour tout allongement inférieur ou égal à 8,5 %. De façon préférée, l'élément filaire textile de renfort écru présente un module tangent inférieur ou égal à 10 cN/tex/% pour tout allongement inférieur ou égal à 10 %, de préférence pour tout allongement inférieur ou égal à 11 %, plus préférentiellement pour tout allongement inférieur ou égal à 12 % et encore plus préférentiellement pour tout allongement inférieur ou égal à 13 %.

Avantageusement, l'élément filaire textile de renfort écru présente un module tangent inférieur ou égal à 15 cN/tex/% pour tout allongement inférieur ou égal à 6 %, de préférence pour tout allongement inférieur ou égal à 7,5 %, plus préférentiellement pour tout allongement inférieur ou égal à 9 % et encore plus préférentiellement pour tout allongement inférieur ou égal à 10,5 %. De façon préférée, l'élément filaire textile de renfort écru présente un module tangent inférieur ou égal à 15 cN/tex/% pour tout allongement inférieur ou égal à 12 %, de préférence pour tout allongement inférieur ou égal à 13 %, plus préférentiellement pour tout allongement inférieur ou égal à 14 % et encore plus préférentiellement pour tout allongement inférieur ou égal à 15 %.

### Elément filaire textile de renfort adhérisé

On va maintenant décrire quatre modes de réalisation préférés de l'invention. Dans un premier mode de réalisation, on maximise la déformabilité de l'élément filaire textile adhérisé. Dans un deuxième mode de réalisation, on favorise la déformabilité dans le compromis entre déformabilité et module. Dans un troisième mode de réalisation, on favorise le module dans le compromis entre déformabilité et module. Dans un quatrième mode de réalisation, on maximise le module de l'élément filaire textile adhérisé.

Les mêmes avantages s'appliquent lorsque l'élément filaire textile est utilisé dans d'autres armatures du pneumatique, par exemple, l'armature de travail ou l'armature de carcasse.

Les premier et deuxième modes de réalisation ont pour caractéristiques communes les caractéristiques avantageuses suivantes.

Avantageusement, l'élément filaire textile de renfort adhérisé présente un module tangent inférieur ou égal à 3 cN/tex/% pour tout allongement inférieur ou égal à 2 %.

Avantageusement, l'élément filaire textile de renfort adhérisé présente un module tangent inférieur ou égal à 5 cN/tex/% pour tout allongement inférieur ou égal à 3 %.

Avantageusement, l'élément filaire textile de renfort adhérisé présente un module tangent inférieur ou égal à 10 cN/tex/% pour tout allongement inférieur ou égal à 5 %.

Avantageusement, l'élément filaire textile de renfort adhérisé présente un module tangent inférieur ou égal à 15 cN/tex/% pour tout allongement inférieur ou égal à 6 %.

Grâce aux propriétés définies ci-dessus, l'élément filaire textile de renfort adhérisé présente une courbe force-allongement présentant un module relativement faible aux petits allongements et donc une bonne déformabilité. Dans les cas où l'élément filaire textile de renfort adhérisé est destiné à former un élément filaire textile de renfort d'une armature de frettage, un tel élément filaire textile permet, grâce à un module tangent relativement faible à cru, c'est-à-dire avant l'étape de cuisson, une déformation radiale et circonférentielle aisée du pneumatique lors de son procédé de fabrication.

Avantageusement, l'élément filaire textile de renfort adhérisé présente un allongement à rupture supérieur ou égal à 10 %.

### Premier mode de réalisation de l'invention

Avantageusement, l'élément filaire textile de renfort adhérisé présente un module tangent inférieur ou égal à 3 cN/tex/% pour tout allongement inférieur ou égal à 6 %, de préférence pour tout allongement inférieur ou égal à 7 %, plus préférentiellement pour tout allongement inférieur ou égal à 8 % et encore plus préférentiellement pour tout allongement inférieur ou égal à 9 %.

Avantageusement, l'élément filaire textile de renfort adhérisé présente un module tangent inférieur ou égal à 5 cN/tex/% pour tout allongement inférieur ou égal à 7,5 %, de préférence pour tout allongement inférieur ou égal à 8,5 %, plus préférentiellement pour tout allongement inférieur ou égal à 9,5 % et encore plus préférentiellement pour tout allongement inférieur ou égal à 10,5 %.

Avantageusement, l'élément filaire textile de renfort adhérisé présente un module tangent inférieur ou égal à 10 cN/tex/% pour tout allongement inférieur ou égal à 10 %, de préférence pour tout allongement inférieur ou égal à 11 %, plus préférentiellement pour tout allongement inférieur ou égal à 12 % et encore plus préférentiellement pour tout allongement inférieur ou égal à 13 %.

Avantageusement, l'élément filaire textile de renfort adhérisé présente un module tangent inférieur ou égal à 15 cN/tex/% pour tout allongement inférieur ou égal à 12 %, de préférence pour tout allongement inférieur ou égal à 13 %, plus préférentiellement pour tout allongement inférieur ou égal à 14 % et encore plus préférentiellement pour tout allongement inférieur ou égal à 15 %.

Sur une plage relativement grande d'allongements, l'élément filaire textile de renfort adhérisé présente un module tangent relativement faible permettant une excellente déformabilité. Ainsi, pour une plage relativement grande d'allongements, l'élément filaire textile de renfort adhérisé et donc la nappe dans laquelle il est destiné à être noyé, développent un effort relativement faible.

Dans les cas où l'élément filaire textile de renfort adhérisé est destiné à former un élément filaire textile de renfort d'une armature de frettage, cela réduit, lors de la mise en tension de l'élément filaire textile de renfort de frettage, les risques de pénétration de l'élément filaire textile de renfort dans les nappes qui sont radialement intérieures à la nappe de frettage et les risques de variation de la géométrie obtenue du pneumatique par rapport à la géométrie attendue du pneumatique. Ainsi, avantageusement, si on le désire, on peut réduire la pression appliquée à l'intérieure du pneumatique lors de la cuisson.

Avantageusement, l'élément filaire textile de renfort adhérisé présente un allongement à rupture supérieur ou égal à 14 %, de préférence supérieur ou égal à 15 %, plus préférentiellement supérieur ou égal à 16 % et encore plus préférentiellement supérieur ou égal à 17 %.

### Deuxième mode de réalisation de l'invention

Avantageusement, l'élément filaire textile de renfort adhérisé présente un module tangent supérieur ou égal à 3 cN/tex/% pour tout allongement supérieur ou égal à 6 %, de préférence pour tout allongement supérieur ou égal à 5 %, plus préférentiellement pour tout allongement supérieur ou égal à 4 % et encore plus préférentiellement pour tout allongement supérieur ou égal à 3 %.

Avantageusement, l'élément filaire textile de renfort adhérisé présente un module tangent supérieur ou égal à 5 cN/tex/% pour tout allongement supérieur ou égal à 7,5 %, de préférence pour tout allongement supérieur ou égal à 6,5 %, plus préférentiellement pour tout allongement supérieur ou égal à 5,5 % et encore plus préférentiellement pour tout allongement supérieur ou égal à 4,5 %.

Avantageusement, l'élément filaire textile de renfort adhérisé présente un module tangent supérieur ou égal à 10 cN/tex/% pour tout allongement supérieur ou égal à 10 %, de préférence pour tout allongement supérieur ou égal à 8,5 %, plus préférentiellement pour tout allongement supérieur ou égal à 7,5 % et encore plus préférentiellement pour tout allongement supérieur ou égal à 6,5 %.

Avantageusement, l'élément filaire textile de renfort adhérisé présente un module tangent supérieur ou égal à 15 cN/tex/% pour tout allongement supérieur ou égal à 12 %, de préférence pour tout allongement supérieur ou égal à 10,5 %, plus préférentiellement pour tout allongement supérieur ou égal à 9 % et encore plus préférentiellement pour tout allongement supérieur ou égal à 7,5 %.

Le module de l'élément filaire textile de renfort adhérisé est ici relativement plus élevé que dans le premier mode de réalisation. Ainsi, comme lors du procédé de fabrication du pneumatique, l'allongement de chaque élément filaire textile de renfort adhérisé est partiellement consommé, le module de chaque élément filaire textile de renfort une fois extrait du pneumatique pour des allongements relativement faibles correspond au module de chaque élément filaire textile de renfort adhérisé à cru pour des allongements plus élevés. En conséquence, le module de chaque élément filaire textile de renfort une fois extrait du pneumatique est relativement élevé au point de garantir de bonnes propriétés de résistance mécanique de la nappe dans laquelle il est noyé. Néanmoins, cette rigidité reste suffisamment modeste pour permettre une excellente déformabilité radiale et circonférentielle du pneumatique.

Dans les cas où l'élément filaire textile de renfort adhérisé est destiné à former un élément filaire textile de renfort d'une armature de frettage, on limite les risques d'effondrement du sommet du pneumatique lors de sa manipulation. En effet, le module relativement élevé confère une rigidité largement suffisante à l'armature de sommet du pneumatique pour supporter, à l'état cru, son propre poids ainsi que celui de la bande de roulement, et ainsi réduire les risques d'effondrement radial du sommet sur lui-même.

Avantageusement, l'élément filaire textile de renfort adhérisé présente un allongement à rupture inférieur ou égal à 14 %, de préférence inférieur ou égal à 13 %, plus préférentiellement inférieur ou égal à 12 % et encore plus préférentiellement inférieur ou égal à 11 %.

Les troisième et quatrième modes de réalisation ont pour caractéristiques communes les caractéristiques avantageuses suivantes

Avantageusement, l'élément filaire textile de renfort adhérisé présente un module tangent supérieur ou égal à 3 cN/tex/% pour tout allongement supérieur ou égal à 2 %.

Avantageusement, l'élément filaire textile de renfort adhérisé présente un module tangent supérieur ou égal à 5 cN/tex/% pour tout allongement supérieur ou égal à 3 %.

Avantageusement, l'élément filaire textile de renfort adhérisé présente un module tangent supérieur ou égal à 10 cN/tex/% pour tout allongement supérieur ou égal à 5 %.

Avantageusement, l'élément filaire textile de renfort adhérisé présente un module tangent supérieur ou égal à 15 cN/tex/% pour tout allongement supérieur ou égal à 6 %.

Avantageusement, l'élément filaire textile de renfort adhérisé présente un allongement à rupture inférieur ou égal à 10 %.

### Troisième mode de réalisation de l'invention

Avantageusement, l'élément filaire textile de renfort adhérisé présente un module tangent inférieur ou égal à 3 cN/tex/% pour tout allongement inférieur ou égal à 0,5 %.

Avantageusement, l'élément filaire textile de renfort adhérisé présente un module tangent inférieur ou égal à 5 cN/tex/% pour tout allongement inférieur ou égal à 0,75 %.

Avantageusement, l'élément filaire textile de renfort adhérisé présente un module tangent inférieur ou égal à 10 cN/tex/% pour tout allongement inférieur ou égal à 3 %.

Avantageusement, l'élément filaire textile de renfort adhérisé présente un module tangent inférieur ou égal à 15 cN/tex/% pour tout allongement inférieur ou égal à 4,5 %.

Le module relativement élevé, surtout pour les petits allongements, permet d'obtenir une excellente force développée par l'élément filaire textile. En outre, cette rigidité permet encore une bonne déformabilité radiale et circonférentielle du pneumatique.

Dans les cas où l'élément filaire textile de renfort adhérisé est destiné à former un élément filaire textile de renfort d'une armature de frettage, un tel mode de réalisation est particulièrement adapté dans le cas de pneumatiques ne nécessitant pas une expansion radiale et circonférentielle élevée.

Avantageusement, l'élément filaire textile de renfort adhérisé présente un allongement à rupture allant de 8 % à 10 %.

### Quatrième mode de réalisation de l'invention

Avantageusement, l'élément filaire textile de renfort adhérisé présente un module tangent supérieur ou égal à 3 cN/tex/% pour tout allongement supérieur ou égal à 0,5 %.

Avantageusement, l'élément filaire textile de renfort adhérisé présente un module tangent supérieur ou égal à 5 cN/tex/% pour tout allongement supérieur ou égal à 0,75 %.

Avantageusement, l'élément filaire textile de renfort adhérisé présente un module tangent supérieur ou égal à 10 cN/tex/% pour tout allongement supérieur ou égal à 3 %.

Avantageusement, l'élément filaire textile de renfort adhérisé présente un module tangent supérieur ou égal à 15 cN/tex/% pour tout allongement supérieur ou égal à 4,5 %.

Grâce à un module très élevé dès les petits allongements, on obtient une force développée très rapidement très élevée ce qui permet, pour des faibles sollicitations, de très bien reprendre les efforts.

Dans les cas où l'élément filaire textile de renfort adhérisé est destiné à former un élément filaire textile de renfort d'une armature de frettage, un tel mode de réalisation est particulièrement adapté dans le cas de pneumatique ne nécessitant pas une expansion radiale et circonférentielle élevée.

Avantageusement, l'élément filaire textile de renfort adhérisé présente un allongement à rupture allant de 6 % à 8 %.

### Autres caractéristiques préférentielles

De préférence, la somme des raideurs en traction à 1% d'allongement des deuxièmes brins, désignée Sc, est supérieure à la raideur en traction à 1 % d'allongement du premier brin, désignée Sa, de préférence Sc/Sa ≥ 10, plus préférentiellement Sc/Sa ≥ 50 et encore plus préférentiellement Sc/Sa ≥ 100. Comme la raideur de la couche est relativement élevée, l'élément filaire textile de renfort de frettage présente alors une raideur significativement plus élevée aux grands allongements qu'aux faibles allongements.

Dans ce mode de réalisation, et ceux qui suivent, on peut obtenir un comportement bi-module adapté de la courbe force-allongement de l'élément filaire textile de renfort grâce à un choix judicieux de raideurs et donc de modules des premier et deuxième brins, la différence de raideurs et donc de modules entre l'âme et la couche étant exacerbée par la structure « Core Insertion » comme expliqué ci-dessus. Avantageusement, le premier brin présente un module sécant en traction à 1% d'allongement inférieur ou égal à 2500 cN/tex, de préférence inférieur ou égal à 900 cN/tex et plus préférentiellement inférieur ou égal à 500 cN/tex.

Avantageusement, chaque deuxième brin présente un module sécant en traction à 1% d'allongement supérieur ou égal à 500 cN/tex, de préférence supérieur ou égal à 1000 cN/tex et plus préférentiellement supérieur ou égal à 2200 cN/tex.

Ainsi, l'élément filaire textile de renfort présente une courbe force-allongement présentant un module relativement faible aux petits allongements et un module relativement élevé aux grands allongements grâce aux modules en traction relativement différents des premier et deuxième brins.

Dans un mode de réalisation, le premier brin comprend un unique monofilament. Dans un mode de réalisation préféré, le premier brin est un brin multifilamentaire comprenant plusieurs monofilaments.

Dans un mode de réalisation, chaque deuxième brin comprend un unique monofilament. Dans un mode de réalisation préféré, chaque deuxième brin est un brin multifilamentaire comprenant plusieurs monofilaments.

Un monofilament est réalisé dans un matériau donné et désigne un filament monolithique issu, par exemple du filage de ce matériau, par exemple par filage au fondu, filage en solution ou filage de gel.

Dans le cas d'un brin comprenant un unique monofilament, le monofilament présente typiquement un diamètre allant de 0,03 mm à 0,50 mm.

Dans le cas d'un brin multifilamentaire comprenant plusieurs monofilaments, les monofilaments présentent typiquement des diamètres allant de 2 à 30 µm. Chaque brin multifilamentaire de monofilaments comprend au moins 2 filaments élémentaires, typiquement plus de 10 filaments élémentaires, de préférence plus de 100 filaments élémentaires et plus préférentiellement plus de 500 filaments élémentaires.

Dans les modes de réalisation décrits ci-dessus, chaque monofilament peut être réalisé à partir d'une ou plusieurs matières afin de former un filament monolithique. De préférence et pour des raisons de coût industriels, chaque monofilament est réalisé dans une unique matière textile.

Dans un mode de réalisation avantageux, le ou les monofilaments du premier brin est ou sont réalisés dans un matériau choisi parmi les polyesters, les polyamides aliphatiques, les celluloses et les mélanges de monofilaments de ces matériaux, de préférence réalisés dans un matériau choisi parmi les polyamides aliphatiques et plus préférentiellement réalisés en nylon 6.6. Les polyamides aliphatiques et notamment le nylon 6.6 présentent une structure moléculaire peu orientée leur conférant une bonne résistance aux sollicitations en compression, qualité recherchée pour l'âme de l'élément filaire textile de renfort, notamment pour améliorer son endurance.

Dans un mode de réalisation avantageux, le ou les monofilaments de chaque deuxième brin est ou sont réalisés dans un matériau choisi parmi les polyamides aromatiques, les copolyamides aromatiques, les polycétones et les mélanges de monofilaments de ces matériaux, de préférence réalisés dans un matériau choisi parmi les polyamides aromatiques et plus préférentiellement réalisés en para-aramide. Les polyamides aromatiques et notamment le para-aramide présentent une excellente ténacité leur conférant une bonne force à rupture, qualité recherchée pour la couche de l'élément filaire textile de renfort.

Dans les modes de réalisation précédents, par mélanges de monofilaments de ces matériaux, on entend des brins multifilamentaires comprenant un mélange de monofilaments réalisés dans des matériaux différents. De tels brins multifilamentaires sont notamment décrits dans WO2009052844.

Par monofilament en polyamide aromatique ou copolyamides aromatiques, on rappelle de manière bien connue qu'il s'agit d'un monofilament de macromolécules linéaires formées de groupes aromatiques liés entre eux par des liaisons amides dont au moins 85% sont directement liées à deux noyaux aromatiques, et plus particulièrement de fibres en poly (p-phénylène téréphtalamide) (ou PPTA), fabriquées depuis fort longtemps à partir de compositions de filage optiquement anisotropes. Parmi les polyamides aromatiques ou copolyamides aromatiques, on pourra citer les polyarylamides (ou PAA, notamment connu sous la dénomination commerciale Ixef de la société Solvay), le poly(métaxylylène adipamide), les polyphtalamides (ou PPA, notamment connu sous la dénomination commerciale Amodel de la société Solvay), les polyamides semi-aromatiques amorphes (ou PA 6-3T, notamment connu sous la dénomination commerciale Trogamid de la société Evonik), les para-aramides (ou poly(paraphénylène téréphtalamide ou PA PPD-T notamment connu sous la dénomination commerciale Kevlar de la société Du Pont de Nemours ou Twaron de la société Teijin).

Par monofilament en polycétone, on entend un monofilament en polymère thermoplastique obtenu par polycondensation d'éthylène et de monoxyde de carbone. Les filaments en polycétone ont eux aussi été décrits dans un très grand nombre de publications, par exemple EP 310 171, EP 456 306, EP 1 925 467, WO 2002/068738 ou US 6 818 728, US 2007/0017620, US 2009/0266462. A titre d'exemple, on pourra citer le Karilon de la société Hyosung, l'Akrotek de la société Akro-Plastic ou le Schulaketon de la société Schulman.

Par monofilament en polyester, on rappelle qu'il s'agit d'un monofilament de macromolécules linéaires formées de groupes liés entre eux par des liaisons esters. Les polyesters sont fabriqués par polycondensation par estérification entre un diacide carboxylique ou de l'un de ses dérivés et un diol. Par exemple, le polyéthylène téréphtalate peut être fabriqué par polycondensation de l'acide téréphtalique et de l'éthylène glycol. Parmi les polyesters connus, on pourra citer le polyéthylène téréphtalate (PET), le polyéthylène naphthalate (PEN), le polybutylène téréphthalate (PBT), le polybutylène naphthalate (PBN), le polypropylène téréphthalate (PPT) ou le polypropylène naphthalate (PPN).

Par monofilament en polyamide aliphatique, on entend un monofilament de macromolécules linéaires de polymères ou copolymères contenant des fonctions amides ne présentant pas de cycles aromatiques et pouvant être synthétisés par polycondensation entre un acide carboxylique et une amine. Parmi les polyamides aliphatiques, on pourra citer les nylons PA4.6, PA6, PA6.6 ou encore PA6.10, et notamment le Zytel de la société DuPont, le Technyl de la société Solvay ou le Rilsamid de la société Arkema.

Par monofilament en cellullose, on entend un monofilament en une matière cellulosique, c'est-à-dire à base de cellulose, d'un dérivé cellulosique ou de cellulose régénérée à partir d'un dérivé cellulosique, quel que soit bien entendu le procédé de filage. Par « dérivé cellulosique » il faut comprendre tout composé formé, à la suite de réactions chimiques, par substitution des groupes hydroxyle de la cellulose, ce dérivé étant aussi appelé dérivé de substitution. De manière tout aussi connue, on entend par « cellulose régénérée » une cellulose obtenue par un traitement de régénération réalisé sur un dérivé cellulosique. A titre d'exemples de fibres cellulosiques, on citera par exemple les fibres de rayonne ou viscose commercialisées par la société Cordenka ou les fibres de « Lyocell » commercialisées par la société Hyosung. On peut également citer les fibres à haut module en formiate de cellulose ou en cellulose régénérée telles que décrites dans les demandes WO 85/05115 ou WO 97/06294.

Ainsi, dans un mode de réalisation préféré, le premier brin de l'âme comprend au moins un monofilament réalisé dans un polyamide aliphatique, de préférence réalisé en nylon 6.6. De préférence, le premier brin est un brin multifilamentaire comprenant plusieurs monofilaments réalisés dans un polyamide aliphatique, de préférence réalisés en nylon 6.6. Les inventeurs ont découvert que le matériau constitutif de l'âme influait de façon importante sur l'endurance en compression de l'élément filaire textile. En effet, en étant au centre de l'élément filaire textile et donc sans hélice, le matériau de l'âme est immédiatement sollicité lorsque l'élément filaire textile est mis en compression axiale. Les polyamides aliphatiques présentant une endurance en compression améliorée par rapport aux polyesters, les inventeurs ont ainsi obtenu un élément filaire textile de renfort très endurant en compression.

Dans un mode de réalisation préféré, chaque deuxième brin de la couche comprend au moins un monofilament réalisé dans un polyamide aromatique, de préférence réalisé en para-aramide. De préférence, chaque deuxième brin de la couche est un brin multifilamentaire comprenant plusieurs monofilaments réalisés dans un polyamide aromatique, de préférence réalisés en para-aramide. Les inventeurs ont découvert que pour de faibles sollicitations et donc de faibles allongements, les deuxièmes brins de couche, de par leur hélice, influent peu sur le module car le matériau constitutif des monofilaments des deuxièmes brins de couche n'est pas sollicité. Pour des fortes sollicitations et donc des allongements élevés, l'allongement procuré par l'hélice ayant été consommé par la sollicitation, le matériau constitutif des monofilaments des deuxièmes brins de couche est alors sollicité. Du fait de la sélection d'un polyamide aromatique qui présente une excellente ténacité, on maximise alors le module de l'élément de renfort pour ces fortes sollicitations sans trop augmenter le module de l'élément de renfort pour les allongements plus faibles.

Dans un mode de réalisation, la couche est constituée de trois ou quatre deuxièmes brins, de préférence trois deuxièmes brins. Ainsi, on recouvre facilement intégralement la surface externe de l'âme. On utilise préférentiellement trois deuxièmes brins de façon à limiter le diamètre du ou de chaque élément filaire textile de renfort.

Avantageusement, le facteur de torsion du premier brin de l'âme va de 60 à 80, de préférence de 65 à 75. Avantageusement, le facteur de torsion de chaque deuxième brin de la couche va de 90 à 120, de préférence de 100 à 115.

Le facteur de torsion d'un brin est égal à R x (T/(1000 x ρ))^(1/2), relation dans laquelle R est la torsion du brin en tours par mètre avant son assemblage au sein de l'élément filaire textile de renfort, T le titre du brin en tex et ρ la densité du matériau constitutif du ou des monofilaments du brin.

Avantageusement, le facteur de torsion de l'élément filaire textile de renfort va de 170 à 220, de préférence de 180 à 210.

Le facteur de torsion de l'élément filaire textile de renfort est égal à R' x (T'/(1000 x ρ'))^(1/2), relation dans laquelle R' est la torsion de l'élément filaire textile de renfort en tours par mètre, T' le titre de l'élément filaire textile de renfort en tex et ρ' la densité des matériaux constitutifs du ou des monofilaments de l'élément filaire textile de renfort. Dans le cas de matériaux différents, le titre est obtenu en effectuant une moyenne des titres des brins pondérée par le nombre de brins. Dans le cas de matériaux différents, la densité est obtenue en effectuant une moyenne des densités pondérée par le nombre de brins et le titre de chaque brin.

Dans une première variante de l'âme, le premier brin de l'âme est constitué d'un filé, le filé comprenant au moins un monofilament, de préférence le filé comprenant plusieurs monofilaments. Dans cette première variante, on évite les étapes préalables d'assemblage de plusieurs filés pour fabriquer le brin de l'âme.

Dans une deuxième variante de l'âme, le premier brin de l'âme comprend un assemblage comprenant au moins deux filés distincts, chaque filé comprenant au moins un monofilament, de préférence chaque filé comprenant plusieurs monofilaments.

Avantageusement, le titre du premier brin de l'âme va de 10 tex à 100 tex, de préférence de 40 tex à 60 tex. Par titre du brin, on entend la somme des titres du ou des filés constitutifs du premier brin de l'âme. Ainsi, dans la première variante de l'âme, le titre du filé va de 10 tex à 100 tex, de préférence de 40 tex à 60 tex. Dans la deuxième variante de l'âme, dans le cas de deux filés constituants le premier brin de l'âme, le titre de chaque filé va de 5 tex à 50 tex, de préférence de 20 tex à 30 tex.

Dans une première variante de la couche, chaque deuxième brin de la couche est constitué d'un filé, le filé comprenant au moins un monofilament, de préférence le filé comprenant plusieurs monofilaments. Dans cette première variante, on évite les étapes préalables d'assemblage de plusieurs filés pour fabriquer chaque brin de la couche.

Dans une deuxième variante de la couche, chaque deuxième brin de la couche comprend un assemblage comprenant au moins deux filés distincts, chaque filé comprenant au moins un monofilament, de préférence chaque filé comprenant plusieurs monofilaments.

Avantageusement, le titre de chaque deuxième brin de la couche va de 50 tex à 350 tex, de préférence de 130 tex à 220 tex. Par titre du brin, on entend la somme des titres du ou des filés constitutifs de chaque deuxième brin de la couche. Ainsi, dans la première variante de la couche, le titre du filé va de 50 tex à 350 tex, de préférence de 130 tex à 220 tex. Dans la deuxième variante de la couche, dans le cas de deux filés constituants chaque deuxième brin de la couche, le titre de chaque filé va de 25 tex à 175 tex, de préférence de 65 tex à 110 tex.

Avantageusement, le rapport du titre du premier brin de l'âme sur la somme des titres des deuxièmes brins de la couche va de 0,05 et 0,15. De cette façon, on s'assure que l'âme est suffisamment recouverte par la couche, autrement dit que le premier brin de l'âme est intégralement contenu à l'intérieur d'un espace délimité par la couche.

Dans un mode de réalisation, le procédé comprend les étapes suivantes :
- une étape de torsion du premier brin de l'âme selon un nombre de tours par mètre N1 dans un premier sens de torsion,
- une étape de torsion de chaque deuxième brin de la couche selon un nombre de tours par mètre N1' dans le premier sens de torsion,
- une étape d'assemblage par torsion du premier brin de l'âme et des deuxièmes brins de la couche selon un nombre de tours par mètre N2 dans un deuxième sens de torsion opposé au premier sens de torsion de façon à obtenir l'élément filaire de renfort écru.

De préférence, N1>N1' et N2=N1'. En raison de la géométrie de l'élément filaire textile de renfort, l'âme a besoin de moins de détorsion dans le deuxième sens pour avoir une torsion résiduelle nulle de ses monofilaments alors que le couche a besoin d'une détorsion sensiblement égale dans le deuxième sens pour avoir une torsion résiduelle nulle. Avantageusement, 1,02 ≤ N 1 /N 1' ≤ 1,15 de préférence 1,05 ≤ N 1 /N 1' ≤ 1,10.

Afin d'obtenir le meilleur compromis entre force à rupture et endurance de l'élément filaire textile de renfort présentant les titres définis ci-dessus :
- N1 va de 300 à 380 tours par mètre, de préférence de 320 à 360 tours par mètre,
- N1' va de 275 à 355 tours par mètre de préférence de 295 à 335 tours par mètre, et
- N2 va de 275 à 355 tours par mètre de préférence de 295 à 335 tours par mètre.

L'invention a pour autre objet un procédé de fabrication d'un pneumatique comprenant
- un procédé de fabrication d'un élément filaire textile de renfort adhérisé tel que défini précédemment,
- une étape de fabrication d'une nappe durant laquelle on noie l'élément filaire textile de renfort adhérisé dans une composition, et
- une étape de cuisson d'une ébauche crue du pneumatique comprenant la nappe de façon à obtenir le pneumatique.

Un autre objet de l'invention est un élément filaire textile de renfort adhérisé susceptible d'être obtenu par un procédé tel que défini précédemment.

L'invention a encore pour autre objet un pneumatique comprenant un élément filaire textile de renfort adhérisé tel que défini ci-dessus.

Dans un mode de réalisation particulièrement adapté à l'élément filaire textile de renfort adhérisé décrit ci-dessus, le pneumatique comprend une armature de sommet comprenant une armature de frettage comprenant une nappe de frettage comprenant au moins un élément filaire textile de renfort de frettage faisant un angle strictement inférieur à 10° avec la direction circonférentielle du pneumatique, le ou chaque élément filaire textile de renfort de frettage étant un élément filaire textile de renfort adhérisé tel que défini ci-dessus.

Avantageusement, l'armature de frettage comprend une unique nappe de frettage. Ainsi, l'armature de frettage est, à l'exception de la nappe de frettage, dépourvue de toute nappe renforcée par des éléments de renfort filaires. Les éléments de renfort filaires de telles nappes renforcées exclues de l'armature de frettage du pneumatique comprennent les éléments de renfort filaires métalliques et les éléments de renfort filaires textiles. De façon très préférentielle l'armature de frettage est constituée par une nappe de frettage.

Avantageusement, le ou chaque élément filaire textile de renfort de frettage fait un angle strictement inférieur à 10°, de préférence inférieur ou égal à 7° et plus préférentiellement inférieur ou égal à 5° avec la direction circonférentielle du pneumatique.

Dans un premier mode de réalisation, la nappe de frettage présente avantageusement un module sécant en traction supérieur ou égal à 200 daN/mm pour une force égale à 15% de la force à rupture de la nappe de frettage. Dans un deuxième mode de réalisation, la nappe de frettage présente avantageusement un module sécant en traction supérieur ou égal à 500 daN/mm pour une force égale à 15% de la force à rupture de la nappe de frettage.

Dans le premier mode de réalisation, la nappe de frettage présente avantageusement un module sécant en traction inférieur ou égal à 500 daN/mm pour une force égale à 15% de la force à rupture de la nappe de frettage. Dans le deuxième mode de réalisation, la nappe de frettage présente avantageusement un module sécant en traction inférieur ou égal à 800 daN/mm pour une force égale à 15% de la de la force à rupture de la nappe de frettage.

Avantageusement, la force à rupture de la nappe de frettage est supérieure ou égale à 35 daN/mm, de préférence supérieure ou égale à 45 daN/mm et plus préférentiellement supérieure ou égale à 55 daN/mm. Dans le deuxième mode de réalisation, la force à rupture de la nappe de frettage est avantageusement supérieure ou égale 60 daN/mm, de préférence supérieure ou égale à 70 daN/mm.

Avantageusement, le ou chaque élément filaire textile de renfort de frettage présente, une fois extrait du pneumatique, un module tangent supérieur ou égal à 5 cN/tex/% pour tout allongement supérieur ou égal à 4%, de préférence supérieur ou égal à 3,5 %, plus préférentiellement supérieur ou égal à 3 % et encore plus préférentiellement supérieur ou égal à 2 %. Un tel élément filaire textile de renfort permet, grâce à un module tangent relativement élevé du ou des éléments filaires textiles de frettage à cuit, c'est-à-dire après la fabrication du pneumatique, d'obtenir une armature de frettage suffisamment robuste mécaniquement et donc d'alléger l'armature de sommet du pneumatique sans risquer de dégrader les performances du pneumatique. Ainsi, l'armature de frettage présente un module élevé pour des allongements très faibles et permet de reprendre très rapidement des efforts importants. Cela permet d'alléger d'autant plus le reste de l'armature de sommet du pneumatique, notamment grâce aux moyens décrits ci-après.

Avantageusement, le ou chaque élément filaire textile de renfort de frettage présente, une fois extrait du pneumatique, un module tangent supérieur ou égal à 10 cN/tex/% pour tout allongement supérieur ou égal à 6 %, de préférence supérieur ou égal à 5 % et plus préférentiellement supérieur ou égal à 4 %.

Avantageusement, le ou chaque élément filaire textile de renfort de frettage présente, une fois extrait du pneumatique, un module tangent supérieur ou égal à 15 cN/tex/% pour tout allongement supérieur ou égal à 8 %, de préférence supérieur ou égal à 7 % et plus préférentiellement supérieur ou égal à 6 %.

Avantageusement, le ou chaque élément filaire textile de renfort de frettage présente, une fois extrait du pneumatique, un module tangent supérieur ou égal à 20 cN/tex/% pour tout allongement supérieur ou égal à 8 %.

De façon analogue, pour des allongements plus importants, l'armature de frettage présente un module relativement élevé, voire très élevé, permettant d'alléger sereinement l'armature de sommet du pneumatique sans risquer d'en détériorer les propriétés mécaniques.

Avantageusement, le ou chaque élément filaire textile de renfort de frettage présente, une fois extrait du pneumatique, un allongement à rupture supérieur ou égal à 6 %, de préférence supérieur ou égal à 7 % et plus préférentiellement supérieur ou égal à 8 %. Ainsi, le ou chaque élément filaire textile de renfort de frettage présente un allongement à rupture suffisamment élevé pour absorber les déformations subies par l'armature de sommet lors du roulage du pneumatique, même dans des conditions sévères. De façon analogue, la nappe de frettage présente, une fois extraite du pneumatique, un allongement à rupture supérieur ou égal à 6 %, de préférence supérieur ou égal à 7 % et plus préférentiellement supérieur ou égal à 8 %.

Dans un mode de réalisation, le pneumatique comprend un sommet comprenant une bande de roulement, deux flancs, deux bourrelets, chaque flanc reliant chaque bourrelet au sommet, l'armature de sommet s'étendant dans le sommet selon une direction circonférentielle du pneumatique.

Dans un mode de réalisation, le pneumatique comprend une armature de carcasse ancrée dans chacun des bourrelets et s'étendant dans les flancs et dans le sommet, l'armature de sommet étant radialement intercalée entre l'armature de carcasse et la bande de roulement.

Avantageusement, l'armature de carcasse comprend une unique nappe de carcasse. Ainsi, l'armature de carcasse est, à l'exception de la nappe de carcasse, dépourvue de toute nappe renforcée par des éléments de renfort filaires. Les éléments de renfort filaires de telles nappes renforcées exclues de l'armature de carcasse du pneumatique comprennent les éléments de renfort filaires métalliques et les éléments de renfort filaires textiles. De façon très préférentielle, l'armature de carcasse est constituée par une nappe de carcasse.

De préférence, l'unique nappe de carcasse comprend des éléments filaires de renfort de carcasse.

Dans un mode de réalisation, l'armature de sommet comprend une armature de travail comprenant une unique nappe de travail. Ainsi, l'armature de travail est, à l'exception de la nappe de travail, dépourvue de toute nappe renforcée par des éléments de renfort filaires. Les éléments de renfort filaires de telles nappes renforcées exclues de l'armature de travail du pneumatique comprennent les éléments de renfort filaires métalliques et les éléments de renfort filaires textiles. De façon très préférentielle, l'armature de travail est constituée par une nappe de travail. Les propriétés de résistance mécanique et d'endurance de l'armature de frettage précédemment décrites permettent de supprimer une nappe de travail de l'armature de travail. On obtient un pneumatique significativement allégé.

Dans un mode de réalisation, l'armature de frettage est radialement intercalée entre l'armature de travail et la bande de roulement. En variante, l'armature de frettage pourrait être radialement intercalée entre l'armature de travail et l'armature de carcasse.

De préférence, l'unique nappe de travail comprend des éléments filaires de renfort de travail.

Dans le pneumatique décrit, le sommet comprend la bande de roulement et l'armature de sommet. On entend par bande de roulement une bande de matériau polymérique, de préférence élastomérique, délimitée :
- radialement vers l'extérieur, par une surface destinée à être au contact d'un sol et
- radialement vers l'intérieur, par l'armature de sommet.

La bande de matériau polymérique est constituée d'une nappe d'un matériau matériau polymérique, de préférence élastomérique ou bien constituée d'un empilement de plusieurs nappes, chaque nappe étant constituée d'un matériau matériau polymérique, de préférence élastomérique.

Dans un mode de réalisation très préférentiel, l'armature de sommet comprend une unique armature de frettage et une unique armature de travail. Ainsi, l'armature de sommet est, à l'exception de l'armature de frettage et de l'armature de travail, dépourvue de toute armature renforcée par des éléments de renfort. Les éléments de renfort de telles armatures exclues de l'armature de sommet du pneumatique comprennent les éléments de renfort filaires, les tricots ou bien encore les tissus. De façon très préférentielle, l'armature de sommet est constituée de l'armature de frettage et de l'armature de travail.

Dans un mode de réalisation très préférentiel, le sommet est, à l'exception, de l'armature de sommet, dépourvue de toute armature renforcée par des éléments de renfort. Les éléments de renfort de telles armatures exclues du sommet du pneumatique comprennent les éléments de renfort filaires, les tricots ou bien encore les tissus. De façon très préférentielle, le sommet est constitué par la bande de roulement et l'armature de sommet.

Dans un mode de réalisation très préférentiel, l'armature de carcasse est agencée directement radialement au contact de l'armature de sommet et l'armature de sommet est agencée directement radialement au contact de la bande de roulement. Dans ce mode de réalisation très préférentiel, l'unique nappe de frettage et l'unique nappe de travail sont avantageusement agencées directement radialement au contact l'une de l'autre.

Par directement radialement au contact, on comprend que les objets considérés directement radialement au contact l'un de l'autre, ici les nappes, armatures ou la bande de roulement, ne sont séparés radialement par aucun objet, par exemple par aucune nappe, armature ni bande qui serait interposé radialement entre les objets considérés directement radialement au contact l'un de l'autre.

Dans un mode de réalisation, le ou les éléments de filaire textile de renfort de frettage, les éléments filaires de renfort de travail et les éléments filaires de renfort de carcasse sont agencés de façon à définir, en projection sur le plan circonférentiel équatorial, un maillage triangulaire. Un tel maillage permet d'obtenir des propriétés similaires à celles d'un pneumatique classique de l'état de la technique comprenant une nappe de frettage, deux nappes de travail et une nappe de carcasse.

Dans un mode de réalisation, chaque élément filaire de renfort de carcasse fait un angle A_{C1} supérieur ou égal à 55°, de préférence allant de 55° à 80° et plus préférentiellement allant de 60° à 70°, avec la direction circonférentielle du pneumatique dans le plan médian du pneumatique. Ainsi, les éléments filaires de renfort de carcasse, de par l'angle formé avec la direction circonférentielle, participe à la formation d'un maillage triangulaire dans le sommet du pneumatique.

Dans un mode de réalisation, chaque élément filaire de renfort de carcasse faisant un angle A_{C2} supérieur ou égal à 85° avec la direction circonférentielle du pneumatique dans le plan circonférentiel équatorial du pneumatique. Les éléments filaires de renfort de carcasse sont sensiblement radiaux dans chaque flanc, c'est-à-dire sensiblement perpendiculaires à la direction circonférentielle, ce qui permet de conserver tous les avantages d'un pneumatique à carcasse radiale.

Dans un mode de réalisation, chaque élément filaire de renfort de travail fait un angle A_{T} supérieur ou égal à 10°, de préférence allant de 30° à 50° et plus préférentiellement de 35° à 45° avec la direction circonférentielle du pneumatique dans le plan médian du pneumatique. Ainsi, les éléments filaires de renfort de travail, de par l'angle formé avec la direction circonférentielle, participent à la formation du maillage triangulaire dans le sommet du pneumatique.

Afin de former un maillage triangulaire le plus efficace possible, l'orientation de l'angle A_{T} et l'orientation de l'angle A_{C1} sont préférentiellement opposées par rapport à la direction circonférentielle du pneumatique.

Avantageusement, les éléments filaires de renfort de chaque nappe sont noyés dans une matrice élastomérique. Les différentes nappes peuvent comprendre la même matrice élastomérique ou bien des matrices élastomériques distinctes.

Par matrice élastomérique, on entend une matrice présentant, à l'état réticulé, un comportement élastomérique. Une telle matrice est avantageusement obtenue par réticulation d'une composition comprenant au moins un élastomère et au moins un autre composant. De préférence, la composition comprenant au moins un élastomère et au moins un autre composant comprend un élastomère, un système de réticulation et une charge.

De préférence, l'élastomère est un élastomère diénique, c'est-à-dire pour rappel tout élastomère (élastomère unique ou mélange d'élastomères) qui est issu, au moins en partie (i.e., un homopolymère ou un copolymère), de monomères diènes c'est-à-dire de monomères porteurs de deux doubles liaisons carbone-carbone, que ces dernières soient conjuguées ou non. Cet élastomère diénique est choisi plus préférentiellement dans le groupe constitué par les polybutadiènes (BR), le caoutchouc naturel (NR), les polyisoprènes de synthèse (IR), les copolymères de butadiène, les copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR). Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

De préférence, le système de réticulation de chaque composition est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone et/ou de la silice, est de préférence supérieur à 30 pce, notamment compris entre 30 et 100 pce. Par pce, on entend parties en poids pour cent parties d'élastomère.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 m2/g, de préférence de 30 à 400 m2/g.

L'homme de l'art saura, à la lumière de la présente description, ajuster la formulation des compositions afin d'atteindre les niveaux de propriétés (notamment module d'élasticité) souhaités, et adapter la formulation à l'application spécifique envisagée. Ainsi, chaque composition peut comporter un seul ou plusieurs élastomère(s) diénique(s), également tout ou partie des additifs habituellement utilisés dans les composition destinées à la fabrication de pneumatiques, tels que par exemple des charges renforçantes comme le noir de carbone ou la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute température de transition vitreuse (supérieure à 30°C), des agents facilitant la mise en oeuvre (processabilité) des compositions à l'état cru, des résines tackifiantes, des agents anti-réversion, des accepteurs et donneurs de méthylène tels que par exemple HMT (hexaméthylènetétramine) ou H3M (hexaméthoxyméthylmélamine), des résines renforçantes, des systèmes promoteurs d'adhésion connus du type sels métalliques par exemple, notamment sels de cobalt, de nickel ou de lanthanide.

De préférence, chaque matrice élastomérique présente un module sécant en extension, à 10% d'allongement, qui est compris entre 4 et 25 MPa, plus préférentiellement entre 4 et 20 MPa ; des valeurs comprises notamment entre 5 et 15 MPa se sont révélées particulièrement convenir. Les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Avantageusement, chaque élément filaire de renfort de travail est métallique. Par élément filaire métallique, on entend par définition un élément filaire formé d'un ou d'un assemblage de plusieurs fils constitués intégralement (pour 100% des fils) d'un matériau métallique. Un tel élément filaire métallique est préférentiellement mis en oeuvre avec un ou des fils en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages. Lorsqu'un acier au carbone est avantageusement utilisé, sa teneur en carbone (% en poids d'acier) est de préférence comprise entre 0,2% et 1,2%, notamment entre 0,5% et 1,1% ; ces teneurs représentent un bon compromis entre les propriétés mécaniques requises pour le pneumatique et la faisabilité des fils. Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc.

L'invention sera mieux comprise à la lecture de la description qui va suivre, donnée uniquement à titre d'exemple non limitatif et faite en se référant aux dessins dans lesquels :
- la figure 1 est une vue en coupe perpendiculaire à la direction circonférentielle d'un pneumatique selon l'invention ;
- figure 2 est une vue en arraché du pneumatique de la figure 1 illustrant la projection sur le plan circonférentiel équatorial E des éléments de filaire textile de renfort de frettage, des éléments filaires de renfort de travail et des éléments filaires de renfort de carcasse ;
- la figure 3 est une vue des éléments filaires de renfort de carcasse agencés dans le flanc du pneumatique de la figure 1 en projection sur le plan médian M du pneumatique ;
- la figure 4 est une photographie d'une coupe perpendiculaire à l'axe d'un élément filaire textile de renfort de frettage adhérisé (supposé rectiligne et au repos) du pneumatique de la figure 1 ;
- la figure 5 est un graphique représentant la variation des modules tangents d'éléments filaires textiles de renfort de frettage adhérisé de pneumatiques conformes à l'invention et de l'état de la technique, et
- la figure 6 est un graphique représentant la variation des modules tangents d'éléments filaires textiles de renfort de frettage écrus et adhérisés fabriqués en mettant en oeuvre le procédé selon l'invention.

### EXEMPLE DE PNEUMATIQUE SELON L'INVENTION

Dans les figures, on a représenté un repère X, Y, Z correspondant aux directions habituelles respectivement axiale (X), radiale (Y) et circonférentielle (Z) d'un pneumatique.

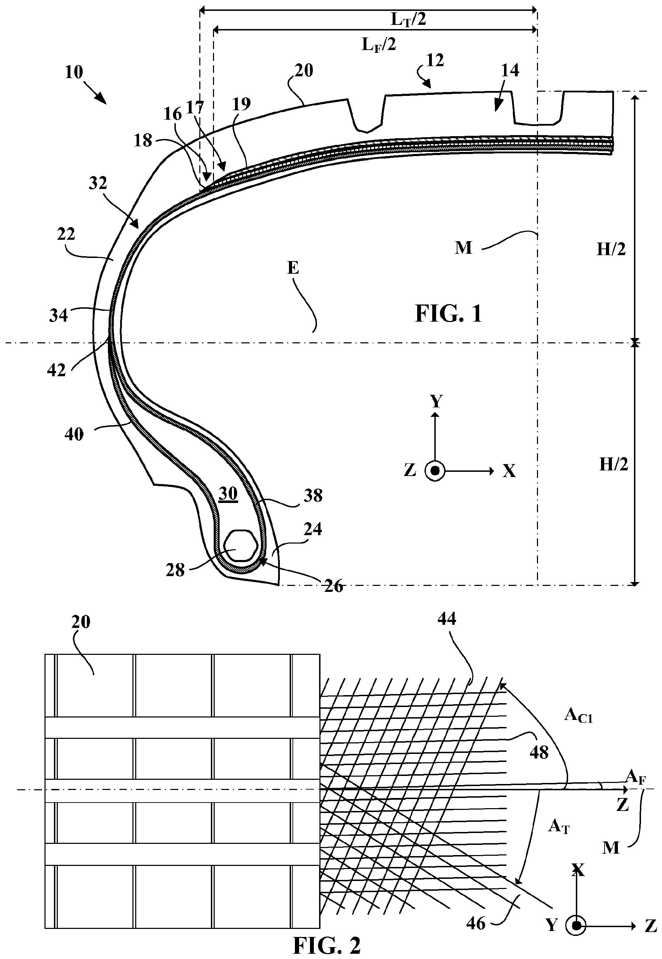

On a représenté sur la figure 1 un pneumatique, conforme à l'invention et désigné par la référence générale 10. Le pneumatique 10 est sensiblement de révolution autour d'un axe sensiblement parallèle à la direction axiale X. Le pneumatique 10 est ici destiné à un véhicule de tourisme.

Le pneumatique 10 comporte un sommet 12 comprenant une bande de roulement 20 et une armature de sommet 14 s'étendant dans le sommet 12 selon la direction circonférentielle Z.

L'armature de sommet 14 comprend une armature de travail 16 comprenant une unique nappe de travail 18 et une armature de frettage 17 comprenant une unique nappe de frettage 19. En d'autres termes, l'armature de travail 16 est constituée de la nappe de travail 18 et l'armature de frettage 17 est constituée de la nappe de frettage 19.

L'armature de sommet 14 est surmontée de la bande de roulement 20. Ici, l'armature de frettage 17, ici la nappe de frettage 19, est radialement intercalée entre l'armature de travail 16 et la bande de roulement 20.

Le pneumatique 10 comprend deux flancs 22 prolongeant le sommet 12 radialement vers l'intérieur. Le pneumatique 10 comporte en outre deux bourrelets 24 radialement intérieurs aux flancs 22 et comportant chacun une structure annulaire de renfort 26, en l'occurrence une tringle 28, surmontée d'un masse de gomme 30 de bourrage, ainsi qu'une armature de carcasse radiale 32. L'armature de sommet 14 est située radialement entre l'armature de carcasse 32 et la bande de roulement 20. Chaque flanc 22 relie chaque bourrelet 24 au sommet 12.

L'armature de carcasse 32 comporte une unique nappe de carcasse 34. L'armature de carcasse 32 est ancrée dans chacun des bourrelets 24 par un retournement autour de la tringle 28 de manière à former dans chaque bourrelet 24 un brin aller 38 s'étendant depuis les bourrelets 24 dans les flancs 22 et dans le sommet 12, et un brin retour 40, l'extrémité radialement extérieure 42 du brin retour 40 étant radialement à l'extérieur de la structure annulaire de renfort 26. L'armature de carcasse 32 s'étend ainsi depuis les bourrelets 24 à travers les flancs 22 jusque dans le sommet 12. Dans ce mode de réalisation, l'armature de carcasse 32 s'étend également axialement au travers du sommet 12. L'armature de sommet 14 est radialement intercalée entre l'armature de carcasse 32 et la bande de roulement 20.

En variante, l'armature de frettage 17 pourrait être radialement intercalée entre l'armature de travail 16 et l'armature de carcasse 32.

Chaque nappe de travail 18, de frettage 19 et de carcasse 34 comprend une matrice élastomérique dans laquelle sont noyés un ou des éléments de renfort de la nappe correspondante.

En référence à la figure 2, l'unique nappe de carcasse 34 comprend des éléments filaires de renfort de carcasse 44. Chaque élément filaire de renfort de carcasse 44 fait un angle A_{C1} supérieur ou égal à 55°, de préférence allant de 55° à 80° et plus préférentiellement de 60° à 70°, avec la direction circonférentielle Z du pneumatique 10 dans le plan médian M du pneumatique 10, autrement dit dans le sommet 12.

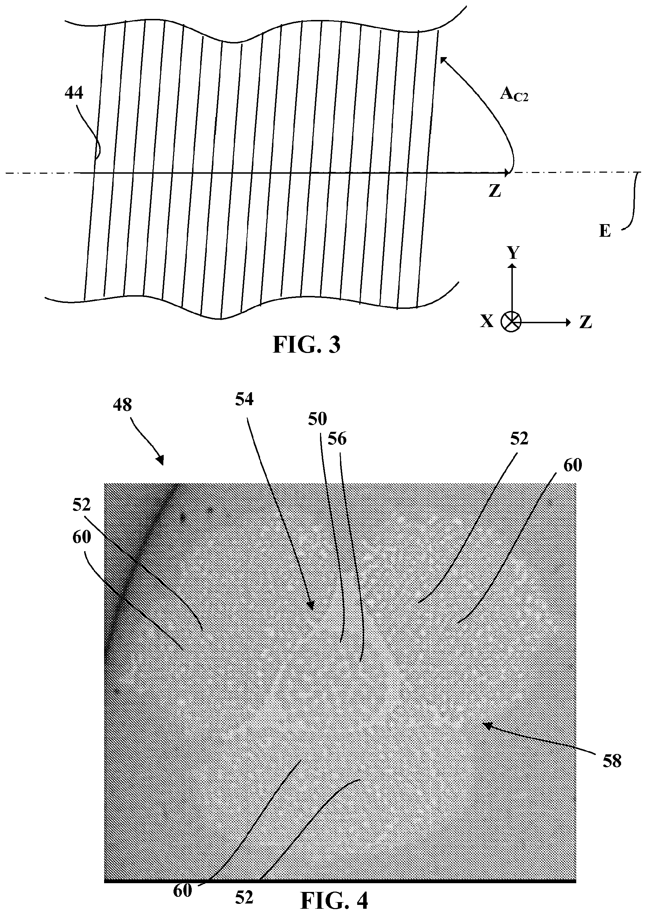

En référence à la figure 3 qui est une vue simplifiée où, compte tenu de l'échelle, tous les éléments filaires de renfort de carcasse 44 sont représentés parallèles les uns aux autres, chaque élément filaire de renfort de carcasse 44 fait un angle A_{C2} supérieur ou égal à 85° avec la direction circonférentielle Z du pneumatique 10 dans le plan circonférentiel équatorial E du pneumatique 10, autrement dit dans chaque flanc 22.

Dans cet exemple, on prend comme convention qu'un angle orienté dans le sens anti-horaire à partir de la droite de référence, ici la direction circonférentielle Z, est de signe positif et qu'un angle orienté dans le sens horaire à partir de la droite de référence, ici la direction circonférentielle Z, est de signe négatif. En l'espèce, A_{C1}=+67° et A_{C2}=+90°.

En référence à la figure 2, l'unique nappe de travail 18 comprend des éléments filaires de renfort de travail 46. Chaque élément filaire de renfort de travail 46 fait un angle A_{T} supérieur ou égal à 10°, de préférence allant de 30° à 50° et plus préférentiellement de 35° à 45° avec la direction circonférentielle Z du pneumatique 10 dans le plan médian M. Compte tenu de l'orientation définie précédemment, A_{T}=-40°.

L'unique nappe de frettage 19 comprend au moins un élément filaire textile de renfort de frettage 48. En l'espèce, la nappe de frettage 19 comprend un unique élément filaire textile de renfort de frettage 48 enroulé continûment sur une largeur axiale L_{F} du sommet 12 du pneumatique 10. Avantageusement, la largeur axiale L_{F} est inférieure à la largeur L_{T} de la nappe de travail 18. L'élément filaire textile de renfort de frettage 48 fait un angle A_{F} strictement inférieur à 10° avec la direction circonférentielle Z du pneumatique 10, de préférence inférieur ou égal à 7°, et plus préférentiellement inférieur ou égal à 5°. En l'espèce, A_{F}=+5°.

La nappe de frettage présente un module sécant en traction égal à 261 daN/mm pour une force égale à 15% de la force à rupture de la nappe de frettage. La force à rupture de la nappe de frettage est égale à 59 daN/mm.

On notera que les éléments filaires de renfort de carcasse 44, de travail 46 et de frettage 48 sont agencés, dans le sommet 12, de façon à définir, en projection sur le plan circonférentiel équatorial E, un maillage triangulaire. Ici, l'angle A_{F} et le fait que l'orientation de l'angle A_{T} et l'orientation de l'angle A_{C1} soient opposées par rapport à la direction circonférentielle Z du pneumatique 10, permettent d'obtenir ce maillage triangulaire.

Chaque élément filaire de renfort de carcasse 44 comprend classiquement deux brins multifilamentaires, chaque brin multifilamentaire étant constitué d'un filé de monofilaments de polyesters, ici de PET, ces deux brins multifilamentaires étant surtordus individuellement à 240 tours.m⁻¹ dans un sens puis retordus ensemble à 240 tours.m⁻¹ dans le sens opposé. Ces deux brins multifilamentaires sont enroulés en hélice l'un autour de l'autre. Chacun de ces brins multifilamentaires présente un titre égal à 220 tex.

Chaque élément filaire de renfort de travail 46 est un assemblage de deux monofilaments en acier présentant chacun un diamètre égal à 0,30 mm, les deux monofilaments en acier étant enroulés l'un avec l'autre au pas de 14 mm.

L'élément filaire textile de renfort de frettage 48, illustré sur la figure 4, comprend au moins un premier brin 50 comprenant au moins un monofilament, en l'espèce un premier brin multifilamentaire comprenant plusieurs monofilaments. Le premier brin présente un module sécant en traction à 1% d'allongement inférieur ou égal à 2500 cN/tex, de préférence inférieur ou égal à 900 cN/tex et plus préférentiellement inférieur ou égal à 500 cN/tex. En l'espèce, les monofilaments du premier brin 50 sont réalisés dans un matériau choisi parmi les polyesters, les polyamides aliphatiques, les celluloses et les mélanges de monofilaments de ces matériaux, de préférence réalisés dans un matériau choisi parmi les polyamides aliphatiques et plus préférentiellement ici réalisés en nylon 6.6.

L'élément filaire textile de renfort de frettage 48 comprend également au moins un deuxième brin 52 comprenant au moins un monofilament, en l'espèce plusieurs deuxièmes brins multifilamentaires comprenant chacun plusieurs monofilaments. Chaque deuxième brin 52 présente un module sécant en traction à 1% d'allongement supérieur ou égal à 500 cN/tex, de préférence supérieur ou égal à 1000 cN/tex et plus préférentiellement supérieur ou égal à 2200 cN/tex. En l'espèce, les monofilaments de chaque deuxième brin 52 sont réalisés dans un matériau choisi parmi les polyamides aromatiques, les copolyamides aromatiques, les polycétones et les mélanges de monofilaments de ces matériaux, de préférence réalisés dans un matériau choisi parmi les polyamides aromatiques et plus préférentiellement ici réalisés en para-aramide.

L'élément filaire textile de renfort de frettage 48 comprend une âme 54 constituée du premier brin 50 tel que décrit ci-dessus. En d'autres termes, l'âme 54 comprend un unique premier brin 50, pas deux.

Dans le mode de réalisation représenté, le premier brin multifilamentaire 50 de l'âme 54 est constitué d'un unique filé 56 de plusieurs monofilaments ici réalisés en nylon 6.6.. Le titre du premier brin 50 de l'âme 54 va de 10 tex à 100 tex et ici de 40 tex à 60 tex. En l'espèce, le premier brin 50 de l'âme 54 est constitué d'un filé présentant un titre égal à 47 tex connu sous la dénomination commerciale Enka Nylon 4444HRT de la société PHP Fibers.

En variante, on pourrait envisager que le premier brin de l'âme comprenne un assemblage comprenant plusieurs filés, c'est-à-dire au moins deux filés, distincts de monofilaments réalisés dans un matériau choisi parmi les polyesters, les polyamides aliphatiques, les celluloses et les mélanges de monofilaments de ces matériaux, de préférence réalisés dans un matériau choisi parmi les polyamides aliphatiques et plus préférentiellement réalisés en nylon 6.6.

L'élément filaire textile de renfort de frettage 48 comprend également une couche 58 comprenant au moins deux deuxièmes brins 52 tels que décrits ci-dessus. Chaque deuxième brin 52 de la couche 58 est enroulé en hélice autour de l'âme 54. La couche 58 est constituée de trois ou quatre deuxièmes brins 52, et ici de trois deuxièmes brins 52.

Dans le mode de réalisation représenté, chaque deuxième brin multifilamentaire 52 de la couche 58 est constitué d'un unique filé 60 de monofilaments ici réalisés en para-aramide. Le titre de chaque deuxième brin 52 de la couche 58 va de 50 tex à 350 tex et ici de 130 tex à 220 tex. En l'espèce, chaque deuxième brin 52 de la couche 58 est constitué d'un filé de monofilaments de para-aramide présentant un titre égal à 167 tex connu sous la dénomination commerciale Twaron 1000 de la société Teijin.

En variante, on pourrait envisager que chaque deuxième brin de la couche comprenne un assemblage comprenant plusieurs filés, c'est-à-dire au moins deux, filés distincts de monofilaments réalisés dans un matériau choisi parmi les polyamides aromatiques, les copolyamides aromatiques, les polycétones et les mélanges de monofilaments de ces matériaux, de préférence réalisés dans un matériau choisi parmi les polyamides aromatiques et plus préférentiellement réalisés en para-aramide.

La somme des raideurs Sc en traction à 1% d'allongement des deuxièmes brins 52 est supérieure à la raideur Sa en traction à 1% d'allongement du premier brin 50. En l'espèce, la raideur en traction à 1% d'allongement de chaque deuxième brin en para-aramide est égale à 621 daN et la raideur en traction à 1% d'allongement du premier brin en nylon 6.6 est égal à 15 daN. On a bien Sc=3 x 621 > Sa=15, de préférence Sc/Sa ≥ 10, plus préférentiellement Sc/Sa ≥ 50 et encore plus préférentiellement Sc/Sa ≥ 100.

Le rapport du titre du premier brin de l'âme sur la somme des titres des deuxièmes brins de la couche va de 0,05 et 0,15 et ici est égal à 0,09.

### Procédé de fabrication de l'élément filaire textile de frettage

On fabrique l'élément filaire textile de renfort adhérisé 48 en mettant en oeuvre un procédé de fabrication comprenant les étapes suivantes.

Le procédé comprend tout d'abord des étapes d'assemblage d'un élément filaire textile de renfort écru dans lesquelles on assemble le premier brin 50 de l'âme 54 et les deuxièmes brins 52 de la couche 58 de façon à former un élément filaire textile de renfort écru.

Dans une étape de torsion du premier brin 50 de l'âme 54, on applique une torsion au premier brin 50 selon un nombre de tours par mètre N1 dans un premier sens de torsion, par exemple le sens Z. Dans une autre étape de torsion de chaque deuxième brin 52 de la couche 58, on applique une torsion à chaque deuxième brin 52 selon un nombre de tours par mètre N1' dans le premier sens de torsion Z.

Puis, dans une étape d'assemblage par torsion du premier brin 50 de l'âme 54 et des deuxièmes brins 52 de la couche 58, on applique une torsion à l'ensemble des brins 50, 52 de l'âme et de la couche selon un nombre de tours par mètre N2 dans un deuxième sens de torsion opposé au premier sens de torsion, ici dans le sens S.

On choisit N1, N1' et N2 de sorte que la torsion résiduelle des monofilaments du premier brin 50 de l'âme 54 et la torsion résiduelle des monofilaments de chaque deuxième brin 52 de la couche 58 est inférieure ou égale à 10 tours.m⁻¹, de préférence sensiblement nulle. Le choix de N1, N1', N2 dépend alors du titre de chaque brin, du nombre de deuxièmes brins de la couche mais également de paramètres du procédé de fabrication, notamment des tensions T₁, T₂ respectivement des premier et deuxièmes brins et/ou des vitesses V₁, V₂ respectivement des premier et deuxièmes brins dans le dispositif d'assemblage. Ainsi, N1>N1' et N2=N1'. Avantageusement, on a 1,02 ≤ N 1/N 1' ≤ 1,15, et de préférence 1,05 ≤ N 1/N 1' ≤ 1,10. Ici N1/N1'=1,08.

N1 va de 300 à 380 tours par mètre, de préférence de 320 à 360 tours par mètre et ici N1=340 tours par mètre. N1' va de 275 à 355 tours par mètre, de préférence de 295 à 335 tours par mètre et ici N1'=315 tours par mètre. N2 va de 275 à 355 tours par mètre, de préférence de 295 à 335 tours par mètre et ici N2=315 tours par mètre.

Ainsi, la densité du nylon 6.6 étant égale à 1,14 et la densité du para-aramide étant égale à 1,44, le facteur de torsion du premier brin 50 de l'âme 54 va de 60 à 80, de préférence de 65 à 75 et ici est égal à 69. Le facteur de torsion de chaque deuxième brin 52 de la couche 58 va de 90 à 120, de préférence de 100 à 115 et est ici égal à 107.

La densité pondérée de l'élément filaire textile de renfort de frettage 48 étant égale à 1,41 et le titre pondéré de l'élément filaire textile de renfort de frettage 48 étant égal à 548 tex, le facteur de torsion de l'élément filaire textile de renfort de frettage 48 va de 170 à 220, de préférence de 180 à 210 et est ici égal à 196.

Avant l'assemblage des premier et deuxièmes brins 50, 52, le procédé comprend une étape d'amenée au cours de laquelle on achemine le premier brin 50 et les deuxièmes brins 52, jusqu'à un point d'assemblage au niveau duquel les premier et deuxièmes brins 50, 52 sont assemblés. Le procédé comprend avantageusement une étape d'asservissement en tension de brin, en boucle fermée, au cours de laquelle :
- on définit une consigne de tension, dite « consigne de tension d'assemblage », qui est représentative d'un état de tension longitudinale que l'on souhaite obtenir dans chaque brin 50, 52 lorsque chaque brin 50, 52 parvient au point d'assemblage,
- on mesure, en un premier point de mesure de tension qui est situé le long de chaque brin 50, 52 et en amont du point d'assemblage par rapport au sens d'acheminement de chaque brin 50, 52, la tension dite « tension d'assemblage effective » qui s'exerce au sein de chaque brin 50, 52, et
- on utilise une boucle de rétroaction en tension pour déterminer une erreur, dite « erreur de tension », qui correspond à la différence entre la consigne de tension d'assemblage et la tension d'assemblage effective de chaque brin 50, 52,
- on pilote, à partir de ladite erreur de tension, un organe régulateur de tension, qui agit sur chaque brin 50, 52en amont du point d'assemblage, de sorte à faire converger automatiquement, au sein de chaque brin 50, 52, la tension d'assemblage effective vers la consigne de tension d'assemblage.

L'installation permettant de mettre en oeuvre ce procédé peut correspondre à un métier à anneau que l'on aura perfectionné en lui ajoutant notamment une unité d'asservissement en tension, ou des unités d'asservissement en tension, permettant d'asservir en boucle fermée la tension de chaque brin 50, 52.

En pratique, l'installation comprend un dispositif d'amenée agencé de manière à permettre de dérouler et d'acheminer jusqu'au point d'assemblage chaque brin 50, 52 depuis une bobine d'entrée sur laquelle chaque brin 50, 52 est initialement stocké. Le dispositif d'amenée considéré pourra avantageusement comprendre un dispositif d'entraînement motorisé situé en amont du point d'assemblage et agencé pour conférer à chaque brin 50, 52 une vitesse dite « vitesse d'avance » en réponse à une consigne d'entraînement que l'on applique au dispositif d'entraînement. Ainsi, le dispositif d'entraînement motorisé permet d'entraîner chaque brin 50, 52 dans un sens dit « sens d'acheminement », de la bobine d'entrée vers le point d'assemblage. Par convention, on considérera que le sens d'acheminement selon lequel chaque brin 50, 52 se déplace de la bobine d'entrée vers le point d'assemblage puis au-delà, correspond à un sens de déplacement amont-aval. Le dispositif d'entraînement motorisé pourra comprendre par exemple un cabestan ou en variante un trio d'appel. Un tel trio d'appel comprend trois rouleaux dont un rouleau planétaire, de préférence libre, et deux rouleaux satellites, de préférence motorisés et synchronisés, les rouleaux étant agencés de manière à ce que chaque brin 50, 52 soit entraîné par friction entre les rouleaux, selon un chemin en forme de Ω (oméga majuscule). Dans cette configuration destinée à entraîner chaque brin 50, 52 en déplacement, le rouleau planétaire peut de préférence venir au contact des deux rouleaux satellites, et la surface cylindrique du rouleau planétaire peut être revêtue d'une couche de gomme antidérapante, afin d'améliorer l'entraînement du rouleau planétaire par les rouleaux satellites. Bien entendu, le dispositif d'amenée pourra comprendre plusieurs dispositifs d'entraînement motorisés distincts, affectés chacun à un brin différent.

Selon une possibilité d'agencement, par ailleurs connue en soi au sein d'une installation de type « métier à anneau », l'installation peut comporter un oeillet de guidage, par exemple en céramique, destiné à guider l'élément filaire textile en aval du point d'assemblage, ici directement en aval du point d'assemblage, ainsi qu'un anneau qui est coaxial à une bobine de sortie et sur lequel un curseur, qui forme un point de passage de l'élément filaire textile situé en aval de l'œillet de guidage et en amont de la bobine de sortie, est monté en glissement libre.

Ainsi, lorsque la bobine de sortie est entraînée en rotation sur son axe, de préférence vertical, au moyen d'une broche motorisée, et exerce ainsi une traction sur l'élément filaire textile, tandis que l'alimentation en brins est assurée par le dispositif d'amenée, le curseur adopte un mouvement de rotation relatif autour de la bobine de sortie, ce qui provoque un effort de vrillage de l'élément filaire textile, et donc le retordage des brins au point d'assemblage, tout en guidant l'enroulement progressif de l'élément filaire textile sur la bobine de sortie. L'anneau est en outre animé d'un mouvement de va-et-vient en translation le long de l'axe de la bobine de sortie de sorte à répartir les spires d'élément filaire textile sur toute la longueur de la bobine de sortie. Par ailleurs, le dispositif d'amenée peut de préférence comprendre un répartiteur agencé pour répartir les brins dans l'espace afin d'ordonner la configuration géométrique selon laquelle les brins convergent vers le point d'assemblage situé en aval, ici directement en aval, et plus préférentiellement juste en dessous, du répartiteur. Le répartiteur peut se présenter sous forme d'une plaque-support qui définit une pluralité de points de passage destinés chacun à guider les brins en provenance des bobines d'entrée et/ou des dispositifs d'entraînement motorisés.

Le procédé comprend une étape d'asservissement en tension de brin. La tension de chaque brin 50, 52 correspond à l'effort de traction longitudinale qui s'exerce au sein chaque brin 50, 52 au point considéré, et donc à la contrainte de traction qui résulte de l'application de cet effort. L'asservissement en tension de chaque brin 50, 52 s'opère en boucle fermée. Au cours de l'étape d'asservissement en tension chaque brin 50, 52:
- on définit une consigne de tension, dite « consigne de tension d'assemblage » T_set, qui est représentative d'un état de tension longitudinale que l'on souhaite obtenir dans chaque brin 50, 52 lorsque chaque brin 50, 52 parvient au point d'assemblage,
- on mesure, en un premier point de mesure de tension PT1 qui est situé le long d chaque brin 50, 52 et en amont du point d'assemblage par rapport au sens d'acheminement de chaque brin 50, 52, la tension dite « tension d'assemblage effective » T_actual qui s'exerce au sein de chaque brin 50, 52,
- on utilise une boucle de rétroaction en tension pour déterminer une erreur, dite « erreur de tension » ER_T, qui correspond à la différence entre la consigne de tension d'assemblage et la tension d'assemblage effective de chaque brin 50, 52 : ER_T = T_set - T_actual, et
- on pilote, à partir de l'erreur de tension ER_T, un organe régulateur de tension, qui agit sur chaque brin 50, 52 en amont du point d'assemblage, de sorte à faire converger automatiquement, au sein de chaque brin 50, 52, la tension d'assemblage effective T_actual vers la consigne de tension d'assemblage T_set.

L'installation comprend donc une unité d'asservissement en tension, agencée pour asservir en boucle fermée la tension du brin considéré selon un mode de fonctionnement dit « mode d'asservissement en tension », l'unité d'asservissement en tension comprenant à cet effet :
- un organe de fixation de consigne de tension qui permet de fixer une consigne, dite « consigne de tension d'assemblage » T_set, qui est représentative d'un état de tension longitudinale que l'on souhaite obtenir dans chaque brin 50, 52 lorsque le brin parvient au point d'assemblage,
- un organe de surveillance de tension qui mesure, en un premier point de mesure de tension PT1 qui est situé le long de chaque brin 50, 52 et en amont du point d'assemblage par rapport au sens d'acheminement de chaque brin 50, 52, la tension dite « tension d'assemblage effective » T_actual qui s'exerce au sein de chaque brin 50, 52,
- un organe de rétroaction en tension qui évalue une erreur, dite « erreur de tension » ER_T, qui correspond à la différence entre la consigne de tension d'assemblage T_set et la tension d'assemblage effective T_actual de chaque brin 50, 52, et
- un organe régulateur de tension, placé sous la dépendance de l'organe de rétroaction en tension, et qui agit sur chaque brin 50, 52 en amont du point d'assemblage de sorte à faire converger automatiquement, au sein de chaque brin 50, 52, la tension d'assemblage effective T_actual vers la consigne de tension d'assemblage T_set.

Bien entendu, on pourra fixer, des consignes de tension d'assemblage T_set différentes pour chaque brin 50, 52, et assurer une régulation séparée de chaque brin 50, 52, indépendante des autres brins.

Par ailleurs, lors de l'étape d'amenée, chaque brin 50, 52 est de préférence, comme cela a été mentionné plus haut, entraîné en déplacement vers le point d'assemblage au moyen d'un dispositif d'entraînement motorisé, tel qu'un cabestan, qui est situé en amont du point d'assemblage et qui est agencé pour conférer à chaque brin 50, 52 une vitesse dite « vitesse d'avance » V_fwd en réponse à une consigne d'entraînement que l'on applique au dispositif d'entraînement motorisé. De préférence, on choisit alors le premier point de mesure de tension PT1, où l'on mesure la tension d'assemblage effective T_actual, de manière à ce que ledit premier point de mesure de tension PT1 soit situé dans un tronçon de chaque brin 50, 52, dit « tronçon d'approche », qui s'étend depuis le dispositif d'entraînement motorisé, en amont, et le point d'assemblage, en aval. Ainsi, avantageusement, la mesure de la tension d'assemblage effective T_actual se fait en un point de mesure PT1 qui est compris entre la position (considérée le long du chemin emprunté par le brin concerné) du dispositif d'entraînement motorisé et la position (considérée le long du chemin emprunté par le brin concerné) du point d'assemblage, et qui est donc particulièrement proche du point d'assemblage. Plus particulièrement, le point de mesure de tension PT1 ainsi choisi peut donc être situé entre le point d'assemblage et le dernier élément moteur, ici le dispositif d'entraînement motorisé, qui précède le point d'assemblage, dans le sens amont-aval de cheminement du brin concerné. La tension d'assemblage effective T_actual est donc mesurée de préférence en aval du dernier dispositif motorisé (ici le dispositif d'entraînement motorisé) qui soit susceptible d'agir activement sur le brin considéré et d'en modifier significativement la tension avant que le brin considéré ne parvienne au point d'assemblage. Par conséquent, la mesure de la tension d'assemblage effective T_actual, qui est réalisée au plus proche du point d'assemblage, dans un tronçon d'approche peu perturbé par des forces externes, est particulièrement fiable, et bien représentative de la tension qui s'exerce réellement dans le brin concerné au moment où le brin atteint le point d'assemblage.

Selon une caractéristique préférentielle, lors de l'étape d'asservissement de tension de brin, on utilisera de préférence le dispositif d'entraînement motorisé, en particulier le dispositif d'entraînement motorisé associé au brin concerné, comme organe régulateur de tension, en ajustant, en fonction de l'erreur de tension ER_T, la consigne d'entraînement que l'on applique au dispositif d'entraînement motorisé. Avantageusement, l'utilisation d'un dispositif motorisé, permet, en fonction de l'erreur de tension ER_T mesurée, soit de ralentir le brin concerné, en amont du point d'assemblage, en appliquant au brin concerné, par l'intermédiaire du dispositif motorisé, une vitesse d'avance V_fwd suffisamment réduite, ce qui aura pour effet de retenir le brin concerné et donc d'augmenter la tension concerné, soit au contraire d'accélérer le brin concerné, en amont du point d'assemblage, c'est-à-dire d'augmenter la vitesse d'avance V_fwd du brin concerné, ce qui aura pour effet de réduire la tension du brin concerné, en « donnant du mou » au brin concerné.

Avantageusement, on pourra ainsi opérer simultanément et simplement sur chaque brin 50, 52 autant de régulations en tension, indépendantes les unes des autres.

Selon une autre caractéristique préférentielle, si, lors de l'étape d'amenée, le brin considéré, par exemple le premier brin 50, est entraîné en déplacement vers le point d'assemblage au moyen d'un dispositif d'entraînement motorisé, tel qu'un cabestan, qui est situé en amont du point d'assemblage, notamment tel que cela a été décrit plus haut, alors le procédé peut également comprendre une étape de déroulage, au cours de laquelle on déroule le brin considéré, ici par exemple le premier brin 50, à partir d'une bobine d'entrée, au moyen d'un dispositif de déroulage qui est distinct du dispositif d'entraînement motorisé du brin considéré et qui est situé en amont dudit dispositif d'entraînement motorisé. Le dispositif de déroulage comprend un porte-bobine motorisé destiné à recevoir et à entraîner en rotation, à une vitesse dite « vitesse de bobine d'entrée » ω7 choisie, la bobine d'entrée concernée. Avantageusement, on peut alors mesurer, en un second point de mesure de tension PT2 qui est situé le long du brin considéré, ici par exemple le long du premier brin 50, entre le porte-bobine motorisé et le dispositif d'entraînement motorisé, la tension dite « tension de déroulage » effective T_unwind_actual qui s'exerce dans le brin considéré, et ajuster en conséquence la vitesse de bobine d'entrée w7 de sorte à faire converger ladite tension de déroulage effective T_unwind_actual vers une consigne de tension de déroulage T_unwind _set prédéterminée. En effet, en contrôlant d'une part, en amont, la vitesse de bobine d'entrée ω7 et donc la vitesse de déroulage à laquelle on libère le brin, et d'autre part, en aval, on peut avantageusement choisir la tension de déroulage du brin, qui règne entre le dispositif de déroulage, en amont, et le dispositif d'entraînement motorisé, en aval. Avantageusement, on procure ainsi au brin concerné, qui se présente en entrée du dispositif d'entraînement motorisé, une tension de déroulage effective T_unwind_actual bien contrôlée, qui fixe un premier palier de pré-tension, à partir duquel on va pouvoir ensuite, grâce à l'action du dispositif d'entraînement motorisé, modifier l'état de tension du brin dans le tronçon d'approche, en aval du dispositif d'entraînement motorisé et en amont du point d'assemblage, afin de conférer audit brin la tension d'assemblage effective T_actual souhaitée. On a à ce titre constaté que la création et le maintien, grâce à une double motorisation (celle du dispositif de déroulage et celle du dispositif d'entraînement motorisé), d'une pré-contrainte de tension, sous la forme d'une tension de déroulage effective T_unwind actual de valeur régulière et bien maîtrisée, permettait avantageusement d'ajuster plus précisément et plus facilement la tension d'assemblage effective T_actual du brin concerné. On notera en particulier que l'existence d'un premier palier de tension, égal à la tension de déroulage effective T_unwind actual, permet, par une action additive (augmentation de la tension par freinage du brin) ou au contraire par une action soustractive (réduction de la tension par accélération du brin) exercée par le dispositif d'entraînement motorisé à partir de ce premier palier, d'atteindre avec précision une tension d'assemblage effective T_actual résultante, formant un second palier de tension, et qui sera librement choisie dans une très large plage de tension d'assemblage effective, dont la limite basse est inférieure (en valeur absolue) au premier palier de tension, c'est-à-dire à la tension de déroulage effective T_unwind_actual, et la limite haute est supérieure audit premier palier de tension. Plus particulièrement, l'existence d'un premier palier de tension permet de descendre, dans le second palier de tension, la tension d'assemblage (aussi bien la consigne que la tension d'assemblage effective) T_set, T_actual à un niveau très bas, par exemple de l'ordre de quelques centi-Newton (ce qui équivaut au poids d'une masse de quelque grammes) ou de quelques dizaines de centi-Newton (ce qui équivaut au poids d'une masse de quelques dizaines de grammes), sans risque de créer des à-coups de tension dans le brin, et sans risque de faire passer la tension d'assemblage effective T_actual par une valeur nulle, ce qui risquerait de faire sortir le brin des guides (poulies, galets, etc.) qui définissent le cheminement du brin à travers l'installation. En particulier, un tel procédé à deux paliers de tension, utilisant deux points de mesure de tension PT1, PT2 situés en amont du point d'assemblage, sur un même brin et distants l'un de l'autre, permet notamment d'obtenir une régulation efficace dans une plage de tension d'assemblage comprise entre T_actual = 5 cN (cinq centi-Newton) et T_actual = 100 cN (cent centi-Newton), que l'on atteint par « soustraction » à partir du premier palier de tension. A titre d'exemple, on pourra choisir pour le premier palier de tension une tension de déroulage T_unwind set (et donc obtenir une tension de déroulage effective T_unwind actual) comprise entre 50 cN (cinquante centi-Newton) et 600 cN, et par exemple égale à 100 cN, à 200 cN, ou à 400 cN, et obtenir, au niveau du second palier de tension, une tension d'assemblage T_actual, précise et stable, qui sera parfaitement conforme à une consigne T_set que l'on aura librement choisie dans une plage possible très large, entre 15 cN (quinze centi-Newton, ce qui correspond à une masse d'environ 15 grammes) et 100 N (cent Newton, ce qui correspond à une masse d'environ dix kilogrammes), voire entre 5 cN (cinq centi-Newton ce qui correspond à une masse d'environ 5 grammes) et 200 N (deux cents Newton, ce qui correspond à une masse d'environ vingt kilogrammes).

Selon une caractéristique préférentielle, l'installation comprend une unité d'asservissement en vitesse d'avance agencée pour asservir en boucle fermée la vitesse d'avance V_fwd de chaque brin selon un mode de fonctionnement dit « mode d'asservissement en vitesse », l'unité d'asservissement en vitesse comprenant à cet effet :
- un organe de fixation de consigne de vitesse qui permet de fixer une consigne, dite « consigne de vitesse d'avance » V_fwd_set, qui correspond à une valeur de vitesse d'avance que l'on souhaite conférer à chaque brin en amont du point d'assemblage,
- un organe de surveillance de vitesse qui mesure, en un point de mesure de vitesse d'avance PV1 qui est situé le long de chaque brin et en amont du point d'assemblage, une valeur de vitesse dite « vitesse d'avance effective » V_fwd_actual qui est représentative de la vitesse d'avance effective de chaque brin au point de mesure PV1 considéré,
- un organe de rétroaction en vitesse qui évalue une erreur, dite « erreur de vitesse » ER_V, qui correspond à la différence entre la consigne de vitesse d'avance et la vitesse d'avance effective de chaque brin : ER_V = V_fwd_set - V_fwd_actual, et
- un organe régulateur de vitesse, placé sous la dépendance de l'organe de rétroaction en vitesse, et qui agit sur chaque brin en amont du point d'assemblage, de sorte à faire converger automatiquement la vitesse d'avance effective V_fwd_actual de chaque brin vers la consigne de vitesse d'avance V_fwd_set.

L'installation peut alors de préférence comporter un sélecteur qui permet d'activer sélectivement, pour chaque brin, le mode d'asservissement en tension ou le mode d'asservissement en vitesse. En d'autres termes, on offre à l'utilisateur une possibilité de sélection, pour chaque brin, entre un mode d'asservissement de chaque brin en tension, et un mode d'asservissement de chaque brin en vitesse d'avance. Le procédé pourra donc prévoir une étape de sélection correspondante. Dans ce cas, il est possible de réaliser de multiples combinaisons d'assemblage, au sein desquelles chaque brin est régulé en tension, voire plusieurs brins sont régulés en tension, tandis qu'un autre brin, voire plusieurs autres brins, sont régulés en vitesse.

On notera par ailleurs que l'asservissement en vitesse, et notamment la mesure de la vitesse d'avance effective F_fwd_actual du brin considéré, intervient de préférence à proximité du point d'assemblage, et par exemple dans le tronçon d'approche, compris entre le dernier élément motorisé qui précède le point d'assemblage et le point d'assemblage, afin que la vitesse d'avance considérée, et asservie, soit représentative de la vitesse d'avance à laquelle le brin parvient au point d'assemblage. De préférence, le point de mesure de vitesse PV1 pourra être situé au niveau du dispositif d'entraînement motorisé.

Pour des titres et des torsions données, on peut faire varier la courbe force-allongement de l'élément filaire textile, et donc notamment son module tangent, en faisant varier la tension T1 ou la vitesse V1 appliquée à l'âme lors de l'étape d'assemblage de son procédé de fabrication. En l'espèce, en augmentant la tension T₁ par rapport à T₂ ou en diminuant la vitesse V₁ par rapport à la vitesse V₂, on diminue le module tangent pour l'ensemble des allongements, on augmente l'allongement à rupture et on diminue la force à rupture de l'élément filaire textile. A l'inverse, en abaissant la tension T₁ par rapport à T₂ ou en augmentant la vitesse V₁ par rapport à la vitesse V₂, on augmente le module tangent pour l'ensemble des allongements, on diminue l'allongement à rupture et on augmente la force à rupture de l'élément filaire textile. En plus de faire varier le module tangent, l'augmentation de la tension T₁ par rapport à T₂ ou la diminution de la vitesse V₁ par rapport à V₂ permet d'améliorer l'endurance de l'élément filaire textile comme cela est démontré dans le test d'endurance décrit ci-dessous. En l'espèce, la vitesse V₁ appliquée au premier brin 50 de l'âme 54 est égale à 9,3 m/min. La vitesse V₂ appliquée à chaque deuxième brin 52 de la couche 58 est égale à 10,55 m/min. La tension appliquée à l'élément filaire textile écru 48 lors de l'étape d'assemblage est égale à 1200 cN.

Postérieurement aux étapes d'assemblages décrites ci-dessus, on obtient l'élément filaire de renfort écru. Le procédé de fabrication comprend alors une étape durant laquelle on revêt l'élément filaire textile de renfort écru d'une couche intermédiaire d'une première composition adhésive thermoréticulable. En l'espèce, on utilise une première composition adhésive ayant une fonction de primaire d'adhésion et comprenant une résine époxy en solution aqueuse, par exemple à base de polyglycérol polyglycidyl éther. Le procédé comprend ensuite une première étape de traitement thermique de l'élément filaire textile de renfort écru revêtu de la couche intermédiaire de façon à réticuler la première composition adhésive. On obtient alors un élément filaire textile de renfort pré-adhérisé.

Puis, le procédé comprend une deuxième étape de revêtement de l'élément filaire textile de renfort pré-adhérisé par une couche externe d'une deuxième composition adhésive thermoréticulable. En l'espèce, on utilise une composition adhésive aqueuse classique de type RFL (Résorcinol-Formaldéhyde-Latex d'élastomère(s)). Puis, le procédé comprend une deuxième étape de traitement thermique de l'élément filaire textile de renfort pré-adhérisé revêtu de la couche externe de façon à réticuler la deuxième composition adhésive. On obtient alors l'élément filaire textile de renfort adhérisé.

Pour l'élément filaire textile de renfort adhérisé 48, lors de la première étape de revêtement par et de traitement thermique de l'élément de renfort écru revêtu de la couche intermédiaire, on applique à l'élément de renfort écru revêtu de la couche intermédiaire une tension T_{T1} ici égale à 0,2 daN. Lors de la deuxième étape de revêtement par et de traitement thermique de l'élément de renfort pré-adhérisé revêtu de la couche externe, on applique à l'élément de renfort pré-adhérisé revêtu de la couche externe une tension T_{T2} supérieure à une pré-tension standard à l'élément filaire textile ici égale à 0,2 daN.

Lors de la deuxième étape de traitement thermique, on applique une tension de traitement T_{T2} telle que T_{T2}/Ta ≥ 3 cN/tex. Ici Ta étant égale à 47 tex, T_{T2}/Ta=3,19 cN/tex. La tension T_{T2} est telle que T_{T2}/Tc ≤ 10 cN/tex, de préférence T_{T2}/Tc ≤ 7 cN/tex, plus préférentiellement T_{T2}/Tc ≤ 5 cN/tex et encore plus préférentiellement T_{T2}/Tc ≤ 4 cN/tex. Ici, Tc étant égale à 501 tex, T_{T2}/Tc=0,3 cN/tex.

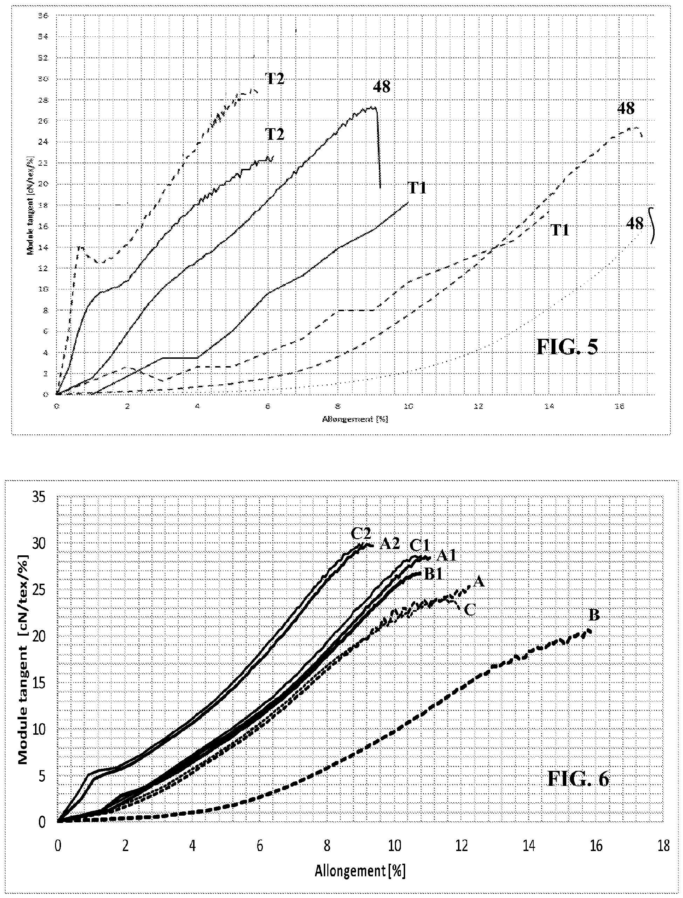

On a comparé un élément filaire textile hybride de US6799618 et désigné par la référence T1, un élément filaire textile hybride classique T2 de WO2016/166056 et l'élément filaire textile 48 décrit ci-dessus. On a mesuré le module tangent de chacun de ces éléments filaires textiles adhérisés avant l'étape de fabrication de la nappe de frettage (courbes en traits pointillés) et une fois extrait du pneumatique (courbes en traits continus). On a également mesuré le module tangent de l'élément filaire textile écru 48 (courbe en points pointillés). On a représenté la variation des modules tangents de ces éléments filaires textiles sur la figure 5.

En référence aux courbes en traits pointillés, on note que l'élément filaire textile adhérisé 48 présente, à la différence de l'élément filaire textile T2, un module tangent inférieur ou égal à 3 cN/tex/% pour tout allongement inférieur ou égal à 2 %. En l'espèce, l'élément filaire textile adhérisé 48 présente un module tangent inférieur ou égal à 3 cN/tex/% pour tout allongement inférieur ou égal à 6 % et voire même inférieur ou égal à 7 %.

On note également que l'élément filaire textile adhérisé 48 présente un module tangent inférieur ou égal à 5 cN/tex/% pour tout allongement inférieur ou égal à 3 %. En l'espèce, l'élément filaire textile adhérisé 48 présente un module tangent inférieur ou égal à 7,5 cN/tex/% pour tout allongement inférieur ou égal à 8,5 %.

En outre, on note que l'élément filaire textile adhérisé 48 présente un module tangent inférieur ou égal à 10 cN/tex/% pour tout allongement inférieur ou égal à 5 %. En l'espèce, l'élément filaire textile adhérisé 48 présente un module tangent inférieur ou égal à 10 cN/tex/% pour tout allongement inférieur ou égal à 10 %, voire inférieur ou égal à 11 %.

En outre, on note que l'élément filaire textile adhérisé 48 présente un module tangent inférieur ou égal à 15 cN/tex/% pour tout allongement inférieur ou égal à 6 %. En l'espèce, l'élément filaire textile adhérisé 48 présente un module tangent inférieur ou égal à 15 cN/tex/% pour tout allongement inférieur ou égal à 12 %.

Au contraire, l'élément filaire textile T2 présente un module tangent inférieur ou égal à 5 cN/tex/% pour des allongements uniquement inférieur ou égal à 0,1 %. Au-delà de 0,1 % d'allongement, le module tangent de l'élément filaire textile T2 est supérieur à 5 cN/tex/%.

De plus, le module tangent de l'élément filaire textile T2, s'il dépasse 10 cN/tex/% pour tout allongement supérieur ou égal à 0,2 %, n'a pas de signification pour tout allongement supérieur ou égal à 6 % qui est la valeur de l'allongement à rupture de l'élément filaire textile T2. L'élément filaire textile adhérisé 48 présente un allongement à rupture bien plus élevé et ici supérieur ou égal à 10 %, en l'espèce supérieur ou égal à 14 %, voire supérieur ou égal à 15%, voire même supérieur ou égal à 16 %, et ici égal à 16,5 %.

En référence aux courbes en traits continus, on note que, une fois extrait du pneumatique, l'élément filaire textile 48 présente un module tangent supérieur ou égal à 5 cN/tex/% pour tout allongement supérieur ou égal à 4 %, voire supérieur ou égal à 3,5 %, voire même supérieur ou égal à 3 % et, dans l'exemple décrit supérieur ou égal à 2 %. L'élément filaire textile T1 présente, une fois extrait du pneumatique, un module tangent supérieur à 5 cN/tex/% pour des allongements uniquement supérieurs à 4,5 %.

On note également que, une fois extrait du pneumatique, l'élément filaire textile 48 présente un module tangent supérieur ou égal à 10 cN/tex/% pour tout allongement supérieur ou égal à 6 %, voire supérieur ou égal à 5 %, voire même supérieur ou égal à 4 % dans l'exemple décrit. Au contraire, l'élément filaire textile T1 présente, une fois extrait du pneumatique, un module tangent supérieur ou égal à 10 cN/tex/% pour des allongements uniquement supérieurs à 6,3 %.

L'élément filaire textile 48 présente, une fois extrait du pneumatique, un module tangent supérieur ou égal à 15 cN/tex/% pour tout allongement supérieur ou égal à 8 %, voire supérieur ou égal à 7 % et, dans l'exemple décrit, supérieur ou égal à 6 %. Au contraire, l'élément filaire textile T1 présente, une fois extrait du pneumatique, un module tangent supérieur ou égal à 15 cN/tex/% pour des allongements uniquement supérieurs à 8,6 %.

L'élément filaire textile 48 présente, une fois extrait du pneumatique, un module tangent supérieur ou égal à 20 cN/tex/% pour tout allongement supérieur ou égal à 8 %. Le module tangent de l'élément filaire textile T1, une fois extrait du pneumatique, n'atteint jamais la valeur de 20 cN/tex/%.

Enfin, on notera, qu'une fois extrait du pneumatique, l'élément filaire textile 48 présente un allongement à rupture supérieur ou égal à 6 %, de préférence supérieur ou égal à 7 % et plus préférentiellement supérieur ou égal à 8 %. L'élément filaire textile T2 présente un allongement à rupture bien inférieur, ici égal à 6 %.

De ces courbes, on constate d'une part que l'élément filaire textile 48 présente des propriétés de résistance mécanique élevées une fois extrait du pneumatique, notamment un module tangent significativement plus élevé que celui de T1, et relativement proche de celui de T2, voire même supérieur pour des allongements supérieurs à l'allongement à rupture de T2. On constate d'autre part que l'élément filaire textile adhérisé 48 présente un module tangent relativement faible, ici significativement plus faible que celui de T2 et inférieur à celui de T1 jusqu'à des allongements inférieurs à 12 %, permettant des déformations radiales et circonférentielles aisées du pneumatique lors de son procédé de fabrication.

Conformément à l'invention, on met en oeuvre les étapes de revêtement par et de traitement thermique de la couche externe de l'élément filaire textile de renfort pré-adhérisé de façon à, pour un allongement égal à 30% de l'allongement à rupture de l'élément filaire textile de renfort écru, ici pour un allongement égal à 30% de 19%, c'est-à-dire 5,7%, augmenter le module tangent de l'élément filaire textile de renfort adhérisé 48, ici égal à 1,5 cN/tex/% par rapport au module tangent de l'élément filaire textile de renfort écru, ici égal à 0,5 cN/tex/%.

En l'espèce, on met en oeuvre les étapes de revêtement par et de traitement thermique de la couche externe de l'élément de renfort pré-adhérisé de façon à, pour tout allongement supérieur ou égal à 30% de l'allongement à rupture de l'élément filaire textile de renfort écru, augmenter le module tangent de l'élément filaire textile de renfort adhérisé 48 par rapport au module tangent de l'élément filaire textile de renfort écru correspondant à un même allongement.

De façon préférée, on met en oeuvre les étapes de revêtement par et de traitement thermique de la couche externe de l'élément de renfort pré-adhérisé de façon à, pour un allongement égal à 20% de l'allongement à rupture de l'élément filaire textile de renfort écru, ici pour un allongement égal à 20% de 19%, c'est-à-dire 3,8%, augmenter le module tangent de l'élément filaire textile de renfort adhérisé 48, ici égal à 0,75 cN/tex/%, par rapport au module tangent de l'élément filaire textile de renfort écru, ici égal à 0,25 cN/tex/%. En l'espèce, on met en oeuvre les étapes de revêtement par et de traitement thermique de la couche externe de l'élément de renfort écru ou pré-adhérisé de façon à, pour tout allongement supérieur ou égal à 20% de l'allongement à rupture de l'élément filaire textile de renfort écru, augmenter le module tangent de l'élément filaire textile de renfort adhérisé 48 par rapport au module tangent de l'élément filaire textile de renfort écru correspondant à un même allongement.

On met en oeuvre les étapes de revêtement par et de traitement thermique de la couche externe de l'élément de renfort pré-adhérisé de façon à augmenter le module tangent à 6 %, 4 % et 2 % d'allongement de l'élément filaire textile de renfort adhérisé par rapport au module tangent respectivement à 6 %, 4% et 2% d'allongement de l'élément filaire textile de renfort écru. En l'espèce, on met en oeuvre les étapes de revêtement par et de traitement thermique de la couche externe de l'élément de renfort pré-adhérisé de façon à, pour tout allongement allant de 6 %, 4% et 2% à l'allongement à rupture de l'élément filaire textile de renfort écru, augmenter le module tangent de l'élément filaire textile de renfort adhérisé 48 par rapport au module tangent de l'élément filaire textile de renfort écru correspondant à un même allongement.

### Procédé de fabrication du pneumatique

On fabrique le pneumatique 10 selon le procédé décrit ci-dessous.

Tout d'abord, on fabrique la nappe de travail 18 et la nappe de carcasse 34 en agençant parallèlement les uns aux autres les éléments filaires textiles de renfort de chaque nappe et en les noyant, par exemple par calandrage, dans une composition non réticulée comprenant au moins un élastomère, la composition étant destinée à former une matrice élastomérique une fois réticulée. On obtient une nappe dite droite, dans laquelle les éléments filaires textiles de renfort de la nappe sont parallèles les uns aux autres et sont parallèles à la direction principale de la nappe. Puis, si nécessaire, on découpe des portions de chaque nappe droite selon un angle de découpe et on aboute ces portions les unes aux autres de façon à obtenir une nappe dite à angle, dans laquelle les éléments filaires textiles de renfort de la nappe sont parallèles les uns aux autres et forment un angle avec la direction principale de la nappe égal à l'angle de découpe.

Puis, on met en oeuvre un procédé d'assemblage tel que décrit dans EP1623819 ou bien dans FR1413102.

Lors de ce procédé d'assemblage, on agence l'armature de frettage 17, ici la nappe de frettage 19, radialement à l'extérieur de l'armature de travail 16. En l'espèce, dans une première variante, on fabrique une bandelette de largeur B significativement inférieure à L_{F}, dans laquelle l'élément filaire textile de renfort adhérisé 48 est noyé dans une composition non réticulée et on enroulé hélicoïdalement la bandelette sur plusieurs tours de façon à obtenir la largeur axiale L_{F}. Dans une deuxième variante, on fabrique la nappe de frettage 19 présentant une largeur L_{F} d'une façon analogue aux nappes de carcasse et de travail et on enroule sur un tour la nappe de frettage 19 sur l'armature de travail 16. Dans une troisième variante, on enroule l'élément filaire textile de renfort adhérisé 48 radialement à l'extérieur de la nappe de travail 18, puis on dépose dessus une couche d'une composition dans laquelle sera noyé l'élément filaire textile de renfort de frettage 48 lors de la cuisson du pneumatique. Dans les trois variantes, on noie l'élément filaire textile de renfort adhérisé 48 dans une composition pour former, à l'issue du procédé de fabrication du pneumatique, la nappe de frettage 19 comprenant l'élément filaire textile de renfort de frettage 48.

Après une étape de pose de la bande de roulement 20, on obtient alors le pneumatique dans lequel les compositions des matrices élastomériques ne sont pas encore réticulées et sont dans un état cru. On parle alors d'une ébauche crue du pneumatique.

Enfin, on réticule les compositions, par exemple par cuisson ou vulcanisation, afin d'obtenir le pneumatique dans lequel les compositions présentent un état réticulé. Lors de cette étape de cuisson, on expanse radialement, circonférentiellement et axialement le pneumatique dont les matrices élastomériques sont à l'état cru, par exemple par mise sous pression d'une membrane de gonflage, de façon à plaquer le pneumatique contre des surfaces d'un moule de cuisson. Cette expansion radiale et circonférentielle est ici avantageusement mise en oeuvre grâce aux éléments filaires textiles de renfort adhérisés des premier et deuxième modes de réalisation, et de façon plus limitée, en mettant en oeuvre les éléments filaires textiles de renfort adhérisés des troisième et quatrième modes de réalisation.

### TESTS COMPARATIFS

On a testé la résistance à la fatigue en compression, en d'autres termes l'endurance en compression, d'éléments filaires textiles hybrides classiques T2 de WO2016/166056 ainsi que d'éléments filaires textiles adhérisés A1, B1, C1, A2 et C2 analogues à l'élément filaire textile 48 décrit ci-dessus et tous conformes à l'invention.

Les éléments filaires textiles adhérisés A1, B1, C1, A2 et C2 sont structurellement identiques à l'élément filaire textile adhérisé 48 mais sont obtenus en mettant en oeuvre des procédés de fabrication différents dans lesquels la vitesse V₂ de chaque deuxième brin 54 de la couche 58 est respectivement égale à 10,3 m.min⁻¹, 10,5 m.min⁻¹, 10,2 m.min⁻¹ pour chaque élément filaire textile écru A, B et C et la vitesse V₁ du premier brin 50 de l'âme 54 est égale à 9,3 m.min⁻¹. La tension appliquée à chaque élément filaire textile écru A et B lors de l'étape d'assemblage est égale à 1100 cN et égale à 550 cN pour l'élément filaire textile écru C.

La tension T_{T1} est égale à 0,15 daN pour tous les éléments filaires textiles de renfort adhérisé A1, B1, C1, A2 et C2. La tension T_{T2} est égale à 0,15 daN pour chaque élément filaire textile de renfort adhérisé A1 et C1. La tension T_{T2} est égale à 1 daN pour tous chaque élément filaire textile de renfort adhérisé A2, B1 et C2.

On a mesuré le module tangent de chacun de ces éléments filaires textiles adhérisés et représenté la variation des modules tangents de ces éléments filaires textiles adhérisés sur la figure 6 (courbes en traits pleins).

On a également mesuré le module tangent des éléments filaires textiles écrus A, B, C ayant permis la fabrication de chacun de ces éléments filaires textiles adhérisés (courbes en traits pointillés). L'élément filaire textile écru A a permis la fabrication des éléments filaires textiles adhérisés A1 et A2 en mettant en oeuvre le procédé selon l'invention aves les paramètres décrits ci-dessus. L'élément filaire textile écru B a permis la fabrication de l'élément filaire textile adhérisé B1 en mettant en oeuvre le procédé selon l'invention aves les paramètres décrits ci-dessus. L'élément filaire textile écru C a permis la fabrication des éléments filaires textiles adhérisés C1 et C2 en mettant en oeuvre le procédé selon l'invention aves les paramètres décrits ci-dessus.

Chaque élément filaire textile de renfort écru A et C présente un module tangent inférieur ou égal à 3 cN/tex/% pour tout allongement inférieur ou égal à 2 %. L'élément filaire textile de renfort écru B présente un module tangent inférieur ou égal à 3 cN/tex/% pour tout allongement inférieur ou égal à 6 %. Chaque élément filaire textile de renfort écru A et C présente un module tangent inférieur ou égal à 5 cN/tex/% pour tout allongement inférieur ou égal à 3 %. L'élément filaire textile de renfort écru B présente un module tangent inférieur ou égal à 5 cN/tex/% pour tout allongement inférieur ou égal à 7,5 %. Chaque élément filaire textile de renfort écru A et C présente un module tangent inférieur ou égal à 10 cN/tex/% pour tout allongement inférieur ou égal à 5 %. L'élément filaire textile de renfort écru B présente un module tangent inférieur ou égal à 10 cN/tex/% pour tout allongement inférieur ou égal à 10 %. Chaque élément filaire textile de renfort écru A et C présente un module tangent inférieur ou égal à 15 cN/tex/% pour tout allongement inférieur ou égal à 6 %. L'élément filaire textile de renfort écru B présente un module tangent inférieur ou égal à 15 cN/tex/% pour tout allongement inférieur ou égal à 12 %.

Chaque élément filaire textile de renfort adhérisé A1, B1 et C1 présente un module tangent inférieur ou égal à 3 cN/tex/% pour tout allongement inférieur ou égal à 2 %. Chaque élément filaire textile de renfort adhérisé A1, B1 et C1 présente un module tangent inférieur ou égal à 5 cN/tex/% pour tout allongement inférieur ou égal à 3 %. Chaque élément filaire textile de renfort adhérisé A1, B1 et C1 présente un module tangent inférieur ou égal à 10 cN/tex/% pour tout allongement inférieur ou égal à 5 %. Chaque élément filaire textile de renfort adhérisé A1, B1 et C1 présente un module tangent inférieur ou égal à 15 cN/tex/% pour tout allongement inférieur ou égal à 6 %. Chaque élément filaire textile de renfort adhérisé A1, B1 et C1 présente un allongement à rupture supérieur ou égal à 10 %.

Chaque élément filaire textile de renfort adhérisé A1, B1 et C1 présente un module tangent supérieur ou égal à 3 cN/tex/% pour tout allongement supérieur ou égal à 3 %. Chaque élément filaire textile de renfort adhérisé A1, B1 et C1 présente un module tangent supérieur ou égal à 5 cN/tex/% pour tout allongement supérieur ou égal à 4,5 %. Chaque élément filaire textile de renfort adhérisé A1, B1 et C1 présente un module tangent supérieur ou égal à 10 cN/tex/% pour tout allongement supérieur ou égal à 7 %. Chaque élément filaire textile de renfort adhérisé A1, B1 et C1 présente un module tangent supérieur ou égal à 15 cN/tex/% pour tout allongement supérieur ou égal à 9 %. Chaque élément filaire textile de renfort adhérisé A1, B1 et C1 présente un allongement à rupture inférieur ou égal à 11 %.

Chaque élément filaire textile de renfort adhérisé A2, C2 présente un module tangent supérieur ou égal à 3 cN/tex/% pour tout allongement supérieur ou égal à 2 %. Chaque élément filaire textile de renfort adhérisé A2, C2 présente un module tangent supérieur ou égal à 5 cN/tex/% pour tout allongement supérieur ou égal à 3 %. Chaque élément filaire textile de renfort adhérisé A2, C2 présente un module tangent supérieur ou égal à 10 cN/tex/% pour tout allongement supérieur ou égal à 5 %. Chaque élément filaire textile de renfort adhérisé A2, C2 présente un module tangent supérieur ou égal à 15 cN/tex/% pour tout allongement supérieur ou égal à 6 %. Chaque élément filaire textile de renfort adhérisé A2, C2 présente un allongement à rupture inférieur ou égal à 10 %.

Chaque élément filaire textile de renfort adhérisé A2, C2 présente un module tangent inférieur ou égal à 3 cN/tex/% pour tout allongement inférieur ou égal à 0,5 %. Chaque élément filaire textile de renfort adhérisé A2, C2 présente un module tangent inférieur ou égal à 5 cN/tex/% pour tout allongement inférieur ou égal à 0,75 %. Chaque élément filaire textile de renfort adhérisé A2, C2 présente un module tangent inférieur ou égal à 10 cN/tex/% pour tout allongement inférieur ou égal à 3 %. Chaque élément filaire textile de renfort adhérisé A2, C2 présente un module tangent inférieur ou égal à 15 cN/tex/% pour tout allongement inférieur ou égal à 4,5 %. Chaque élément filaire textile de renfort adhérisé A2, C2 présente un allongement à rupture allant de 8 % à 10 %.

Au cours du procédé, on met en oeuvre les étapes de revêtement par et de traitement thermique de la couche externe de chaque élément filaire textile de renfort pré-adhérisé de façon à, pour un allongement égal à 30% de l'allongement à rupture de chaque élément filaire textile de renfort écru A, B, C, ici pour un allongement égal à 4 % pour chaque élément filaire textile de renfort écru A et C et égal à 5,3 % pour l'élément filaire textile de renfort écru B, augmenter le module tangent de l'élément filaire textile de renfort adhérisé A1, B1, C2, A2, C2 par rapport au module tangent de l'élément filaire textile de renfort écru A, B, C. En l'espèce, le module tangent passe de 5,5 cN/tex/% pour chaque élément filaire textile de renfort écru A et C à 7 cN/tex/% pour chaque élément filaire textile de renfort adhérisé A1 et C1 ou à 10,5-11 cN/tex/% pour chaque élément filaire textile de renfort adhérisé A2 et C2. En l'espèce, le module tangent passe de 2 cN/tex/% pour l'élément filaire textile de renfort écru B à 10 cN/tex/% pour l'élément filaire textile de renfort adhérisé B1. En outre, on met en oeuvre les étapes de revêtement par et de traitement thermique de la couche externe de chaque élément de renfort pré-adhérisé de façon à, pour tout allongement supérieur ou égal à 30% de l'allongement à rupture de chaque élément filaire textile de renfort écru A, B, C, augmenter le module tangent de chaque élément filaire textile de renfort adhérisé A1, B1, C2, A2, C2 par rapport au module tangent de l'élément filaire textile de renfort écru A, B, C correspondant à un même allongement.

Au cours du procédé, on met en oeuvre les étapes de revêtement par et de traitement thermique de la couche externe de chaque élément filaire textile de renfort pré-adhérisé de façon à, pour un allongement égal à 20% de l'allongement à rupture de chaque élément filaire textile de renfort écru A, B, C, ici pour un allongement égal à 2,4 % pour chaque élément filaire textile de renfort écru A et C et égal à 3,2 % pour l'élément filaire textile de renfort écru B, augmenter le module tangent de l'élément filaire textile de renfort adhérisé A1, B1, C2, A2, C2 par rapport au module tangent de l'élément filaire textile de renfort écru A, B, C. En l'espèce, le module tangent passe de 2,5 cN/tex/% pour chaque élément filaire textile de renfort écru A et C à 3,5 cN/tex/% pour chaque élément filaire textile de renfort adhérisé A1 et C1 ou à 7,5 cN/tex/% pour chaque élément filaire textile de renfort adhérisé A2 et C2. En l'espèce, le module tangent passe de 0,75 cN/tex/% pour l'élément filaire textile de renfort écru B à 5 cN/tex/% pour l'élément filaire textile de renfort adhérisé B1. En outre, on met en oeuvre les étapes de revêtement par et de traitement thermique de la couche externe de chaque élément de renfort pré-adhérisé de façon à, pour tout allongement supérieur ou égal à 20% de l'allongement à rupture de chaque élément filaire textile de renfort écru A, B, C, augmenter le module tangent de chaque élément filaire textile de renfort adhérisé A1, B1, C2, A2, C2 par rapport au module tangent de l'élément filaire textile de renfort écru A, B, C correspondant à un même allongement.

Dans des modes de réalisation illustrés, chaque élément filaire textile de renfort adhérisé A1, B1, C2, A2, C2 présente un allongement à rupture supérieur ou égal à 6 % et chaque élément filaire textile de renfort écru A, B, C présente un allongement à rupture supérieur ou égal à 6 %. On met en oeuvre les étapes de revêtement par et de traitement thermique de la couche externe de chaque élément de renfort pré-adhérisé de façon à augmenter le module tangent à 6 %, 4 % et 2 % d'allongement de chaque élément filaire textile de renfort adhérisé A1, B1, C2, A2, C2 par rapport au module tangent respectivement à 6 %, 4% et 2% d'allongement de chaque élément filaire textile de renfort écru A, B, C. En l'espèce, on met en oeuvre les étapes de revêtement par et de traitement thermique de la couche externe de l'élément de renfort pré-adhérisé de façon à, pour tout allongement allant de 2% à l'allongement à rupture de chaque élément filaire textile de renfort écru A, B, C, augmenter le module tangent de chaque élément filaire textile de renfort adhérisé A1, B1, C2, A2, C2 par rapport au module tangent de chaque élément filaire textile de renfort écru A, B, C correspondant à un même allongement.

Pour des éléments filaires textiles destinés à renforcer des pneumatiques, la résistance à la fatigue peut être analysée en soumettant ces éléments filaires textiles à divers tests de laboratoire connus, notamment au test de fatigue connu sous le nom de test « courroie » parfois nommé « Shoe Shine test », test dans lequel les éléments filaires textiles, préalablement encollés, sont incorporés dans un article élastomérique. Le principe du test « courroie » est le suivant : la courroie comprend deux couches d'éléments filaires textiles, la première couche comprenant les éléments filaires textiles dont on souhaite évaluer la performance noyés au pas de 1,25 mm dans deux skims de composition de 0,4 mm chacun et une deuxième couche de rigidification permettant d'éviter l'allongement de la première couche, cette deuxième couche comprenant des éléments filaires textiles relativement rigides et comprenant deux brins en aramide de 167 tex chacun retordus ensemble à une torsion de 315 tours par mètre et noyés au pas de 0,9 mm dans deux skims de composition de 0,3 mm chacun. L'axe de chaque élément filaire textile est orienté selon la direction longitudinale de la courroie.

On fait ensuite subir à cette courroie les sollicitations suivantes : on entraîne de façon cyclique, à l'aide d'un système bielle-manivelle, la courroie autour d'un galet de diamètre donné, ici 15 mm, de telle sorte que la première couche comprenant les éléments filaires textiles dont on souhaite évaluer la performance soit au contact du galet et que chaque portion élémentaire de la courroie soit soumise à une tension de 15 daN et subisse des cycles de variation de courbure qui la font passer d'un rayon de courbure infini à un rayon de courbure donné et ceci pendant 190 000 cycles, à une fréquence de 7 Hz. Cette variation de courbure de la courroie fait subir aux éléments filaires textiles de la couche intérieure, celle la plus proche du galet, un taux de compression géométrique donné selon le diamètre du galet choisi. A la fin de ces sollicitations, on extrait par décorticage les éléments filaires textiles de la couche intérieure et on mesure la force rupture résiduelle Frr des éléments filaires textiles fatigués. Préalablement, on a mesuré la force à rupture initiale Fri, valeur correspondante à la force d'un élément filaire textile extrait d'une courroie neuve non sollicitée. On calcule alors la déchéance D des éléments filaires textiles par la formule D=100x(1-Frr/Fri). Ainsi, plus D est proche de 100, moins l'élément filaire textile est endurant en compression. A l'inverse, plus D est proche de 0, plus l'élément filaire textile est endurant en compression.

On a rassemblé les résultats dans le tableau 1 ci-dessous.

**Tableau 1**

| | **V₁** | **V₂** | **T_{T1}** | **T_{T2}** | **Déchéance D** |
|---|---|---|---|---|---|
| **T2** | / | / | / | / | 100 |
| **A1** | 9,3 | 10,3 | 0,15 | 0,15 | 50 |
| **A2** | 9,3 | 10,3 | 0,15 | 1 | 50 |
| **B1** | 9,3 | 10,5 | 0,15 | 1 | 34 |
| **C1** | 9,3 | 10,2 | 0,15 | 0,15 | 55 |
| **C2** | 9,3 | 10,2 | 0,15 | 1 | 53 |

A la lecture du tableau 1, on note que les éléments filaires textiles de renfort adhérisés A1 et A2 présentent une même endurance alors qu'ils présentent des modules tangents significativement différents. On constate le même effet pour les éléments filaires textiles de renfort adhérisés C1 et C2. Les éléments filaires textiles de renfort adhérisés A1, A2, C1 et C2 présentent des endurances comparables. On démontre donc ici que l'endurance est uniquement fonction de l'élément filaire textile de renfort écru. En effet, pour les éléments filaires textiles de renfort adhérisés A1, A2, C1 et C2 sont issus d'éléments filaires de renfort écrus A et C présentant des variations de modules tangents quasi identiques et issus de procédés selon l'invention utilisant des tensions T_{T2} différentes entre les éléments filaire textile de renfort adhérisés A1, C1 d'une part, et A2, C2 d'autre part.

On note également que parmi les éléments filaires textiles de renfort adhérisés A1, A2, C1, C2 et B1, celui présentant la meilleure endurance, est l'élément filaire textile de renfort adhérisé B1. On note aussi que les variations des modules tangents des éléments filaires textiles de renfort adhérisés A1, B1 et C1 sont quasi-identiques. Ainsi, on démontre ici que plus le module tangent de l'élément filaire textile de renfort écru est faible sur de grands allongements, meilleure est l'endurance de l'élément filaire textile de renfort adhérisé obtenu.

Ainsi, le procédé selon l'invention permet de fabriquer un élément filaire textile de renfort adhérisé présentant une endurance maximale et un module maximum, l'endurance et le module pouvant être ajustés indépendamment l'un de l'autre.

## Revendications

1. Procédé de fabrication d'un élément filaire textile de renfort adhérisé (48), l'élément filaire textile de renfort adhérisé (48) comprend
- une âme (54) constituée d'un premier brin (50) comprenant au moins un monofilament, et
- une couche (58) comprenant au moins deux deuxièmes brins (52), chaque deuxième brin (52) de la couche (58) comprenant au moins un monofilament, chaque deuxième brin (52) de la couche (58) étant enroulé en hélice autour de l'âme (54) et chaque deuxième brin de la couche est enroulé autour de l'âme sans être enroulé autour du ou des autres deuxièmes brins de la couche,
procédé dans lequel :
- on assemble le premier brin (50) de l'âme (54) et les deuxièmes brins (52) de la couche (58) de façon à former un élément filaire textile de renfort écru,
- on obtient l'élément filaire de renfort écru ou un élément filaire de renfort pré-adhérisé,
- on revêt l'élément filaire textile de renfort écru ou pré-adhérisé d'une couche externe d'au moins une composition adhésive thermoréticulable,
- on traite thermiquement l'élément filaire textile de renfort écru ou pré-adhérisé revêtu de la couche externe de façon à réticuler la composition adhésive pour obtenir l'élément filaire textile de renfort adhérisé (48),
procédé dans lequel on met en oeuvre les étapes de revêtement par et de traitement thermique de la couche externe de l'élément filaire textile de renfort écru ou pré-adhérisé de façon à, pour un allongement égal à 30% de l'allongement à rupture de l'élément filaire textile de renfort écru, augmenter le module tangent de l'élément filaire textile de renfort adhérisé (48) par rapport au module tangent de l'élément filaire textile de renfort écru, avec le module tangent étant calculé à partir d'une courbe force-allongement obtenue en appliquant la norme ASTM D 885/D 885M - 10a de 2014 ; et
**caractérisé en ce que**
la somme des raideurs en traction à 1% d'allongement des deuxièmes brins (52) Sc est supérieure à la raideur en traction à 1% d'allongement du premier brin (50) Sa.

2. Procédé selon la revendication 1, dans lequel :
- on revêt l'élément filaire textile de renfort écru de la couche externe de la composition adhésive thermoréticulable,
- on traite thermiquement l'élément filaire textile de renfort écru revêtu de la couche externe de façon à réticuler la composition adhésive pour obtenir l'élément filaire textile de renfort adhérisé (48),
procédé dans lequel on met en oeuvre les étapes de revêtement par et de traitement thermique de la couche externe de l'élément filaire textile de renfort écru de façon à, pour un allongement égal à 30% de l'allongement à rupture de l'élément filaire textile de renfort écru, augmenter le module tangent de l'élément filaire textile de renfort adhérisé (48) par rapport au module tangent de l'élément filaire textile de renfort écru.

3. Procédé selon la revendication 1, dans lequel :
- on revêt l'élément filaire textile de renfort écru d'une couche intermédiaire d'une première composition adhésive thermoréticulable,
- on traite thermiquement l'élément filaire textile de renfort écru revêtu de la couche intermédiaire de façon à réticuler la première composition adhésive pour obtenir l'élément filaire textile de renfort pré-adhérisé,
- on revêt l'élément filaire textile de renfort pré-adhérisé de la couche externe d'une deuxième composition adhésive thermoréticulable,
- on traite thermiquement l'élément filaire textile de renfort pré-adhérisé revêtu de la couche externe de façon à réticuler la deuxième composition adhésive pour obtenir l'élément filaire textile de renfort adhérisé (48),
procédé dans lequel on met en oeuvre les étapes de revêtement par et de traitement thermique de la couche externe de l'élément filaire textile de renfort pré-adhérisé de façon à, pour un allongement égal à 30% de l'allongement à rupture de l'élément filaire textile de renfort écru, augmenter le module tangent de l'élément filaire textile de renfort adhérisé (48) par rapport au module tangent de l'élément filaire textile de renfort écru.

4. Procédé selon l'une quelconque des revendications précédentes, dans lequel on augmente le module tangent de l'élément filaire textile de renfort adhérisé (48) en appliquant, lors de l'étape de traitement thermique de la couche externe, une tension de traitement T_{T2} supérieure à une pré-tension standard à l'élément filaire textile.

5. Procédé selon l'une quelconque des revendications précédentes, dans lequel, l'âme présentant un titre Ta, on augmente le module tangent de l'élément filaire textile de renfort adhérisé (48) en appliquant, lors de l'étape de traitement thermique de la couche externe, une tension de traitement T_{T2} telle que T_{T2}/Ta ≥ 3 cN/tex, de préférence T_{T2}/Ta ≥ 6 cN/tex, plus préférentiellement T_{T2}/Ta ≥ 10 cN/tex et encore plus préférentiellement T_{T2}/Ta ≥ 20 cN/tex.

6. Procédé selon l'une quelconque des revendications précédentes, dans lequel, la couche présentant un titre Tc, on augmente le module tangent de l'élément filaire textile de renfort adhérisé (48) en appliquant, lors de l'étape de traitement thermique de la couche externe, une tension de traitement T_{T2} telle que T_{T2}/Tc ≤ 10 cN/tex, de préférence T_{T2}/Tc ≤ 7 cN/tex, plus préférentiellement T_{T2}/Tc ≤ 5 cN/tex et encore plus préférentiellement T_{T2}/Tc ≤ 4 cN/tex.

7. Procédé selon l'une quelconque des revendications précédentes, dans lequel on met en oeuvre les étapes de revêtement par et de traitement thermique de la couche externe de l'élément de renfort écru ou pré-adhérisé de façon à, pour un allongement égal à 20% de l'allongement à rupture de l'élément filaire textile de renfort écru, augmenter le module tangent de l'élément filaire textile de renfort adhérisé (48) par rapport au module tangent de l'élément filaire textile de renfort écru.

8. Procédé selon l'une quelconque des revendications précédentes, dans lequel, l'élément filaire textile de renfort adhérisé présentant un allongement à rupture supérieur ou égal à 6 % et l'élément filaire textile de renfort écru présentant un allongement à rupture supérieur ou égal à 6 %, on met en oeuvre les étapes de revêtement par et de traitement thermique de la couche externe de l'élément de renfort écru ou pré-adhérisé de façon à augmenter le module tangent à 6 % d'allongement de l'élément filaire textile de renfort adhérisé (48) par rapport au module tangent à 6 % d'allongement de l'élément filaire textile de renfort écru.

9. Procédé selon l'une quelconque des revendications précédentes, dans lequel, l'élément filaire textile de renfort adhérisé présentant un allongement à rupture supérieur ou égal à 4 % et l'élément filaire textile de renfort écru présentant un allongement à rupture supérieur ou égal à 4 %, on met en oeuvre les étapes de revêtement par et de traitement thermique de la couche externe de l'élément de renfort écru ou pré-adhérisé de façon à augmenter le module tangent à 4 % d'allongement de l'élément filaire textile de renfort adhérisé (48) par rapport au module tangent à 4 % d'allongement de l'élément filaire textile de renfort écru.

10. Procédé selon l'une quelconque des revendications précédentes, dans lequel, l'élément filaire textile de renfort adhérisé présentant un allongement à rupture supérieur ou égal à 2 % et l'élément filaire textile de renfort écru présentant un allongement à rupture supérieur ou égal à 2 %, on met en oeuvre les étapes de revêtement par et de traitement thermique de la couche externe de l'élément de renfort écru ou pré-adhérisé de façon à augmenter le module tangent à 2 % d'allongement de l'élément filaire textile de renfort adhérisé (48) par rapport au module tangent à 2 % d'allongement de l'élément filaire textile de renfort écru.

11. Procédé selon l'une quelconque des revendications précédentes, dans lequel le ou les monofilaments du premier brin (50) est ou sont réalisés dans un matériau choisi parmi les polyesters, les polyamides aliphatiques et les mélanges de monofilaments de ces matériaux, de préférence réalisés dans un matériau choisi parmi les polyamides aliphatiques et plus préférentiellement réalisés en nylon 6.6.

12. Procédé selon l'une quelconque des revendications précédentes, dans lequel le ou les monofilaments de chaque deuxième brin (52) est ou sont réalisés dans un matériau choisi parmi les polyamides aromatiques, les copolyamides aromatiques, les polycétones et les mélanges de monofilaments de ces matériaux, de préférence réalisés dans un matériau choisi parmi les polyamides aromatiques et plus préférentiellement réalisés en para-aramide.

13. Procédé de fabrication d'un pneumatique (10), **caractérisé en ce qu'**il comprend
- un procédé de fabrication d'un élément filaire textile de renfort adhérisé (48) selon l'une quelconque des revendications précédentes,
- une étape de fabrication d'une nappe (19) durant laquelle on noie l'élément filaire textile de renfort adhérisé (48) dans une composition, et
- une étape de cuisson d'une ébauche crue du pneumatique comprenant la nappe de façon à obtenir le pneumatique (10).

## Patentansprüche

1. Verfahren zur Herstellung eines haftverbundenen fadenförmigen textilen Verstärkungselements (48), wobei das haftverbundene fadenförmige textile Verstärkungselement (48) Folgendes umfasst:
- einen Kern (54), der aus einem ersten Strang (50) besteht, der mindestens ein Monofilament umfasst, und
- eine Schicht (58), die mindestens zwei zweite Stränge (52) umfasst, wobei jeder zweite Strang (52) der Schicht (58) mindestens ein Monofilament umfasst, wobei jeder zweite Strang (52) der Schicht (58) spiralförmig um den Kern (54) gewickelt ist und jeder zweite Strang der Schicht um den Kern gewickelt ist, ohne dass er um den weiteren zweiten Strang oder die weiteren zweiten Stränge der Schicht gewickelt ist,
wobei in dem Verfahren:
- der erste Strang (50) des Kerns (54) und die zweiten Stränge (52) der Schicht (58) derart miteinander verbunden werden, dass sie ein unbehandeltes fadenförmiges textiles Verstärkungselement bilden,
- das unbehandelte fadenförmige Verstärkungselement oder ein zur Haftverbindung vorbehandeltes fadenförmiges Verstärkungselement erhalten wird,
- das unbehandelte oder zur Haftverbindung vorbehandelte fadenförmige textile Verstärkungselement mit einer äußeren Schicht aus mindestens einer thermisch vernetzbaren Klebstoffzusammensetzung beschichtet wird,
- das unbehandelte oder zur Haftverbindung vorbehandelte fadenförmige textile Verstärkungselement, das mit der äußeren Schicht beschichtet ist, derart thermisch behandelt wird, dass die Klebstoffzusammensetzung vernetzt und so das haftverbundene fadenförmige textile Verstärkungselement (48) erhalten wird,
wobei in dem Verfahren die Schritte zum Beschichten mit und thermischen Behandeln der äußeren Schicht des unbehandelten oder zur Haftverbindung vorbehandelten fadenförmigen textilen Verstärkungselements derart durchgeführt werden, dass bei einer Dehnung von 30% der Bruchdehnung des unbehandelten fadenförmigen textilen Verstärkungselements der Tangentenmodul des haftverbundenen fadenförmigen textilen Verstärkungselements (48) bezogen auf den Tangentenmodul des unbehandelten fadenförmigen textilen Verstärkungselements erhöht wird, wobei der Tangentenmodul aus einem Spannungs-Dehnungsdiagramm berechnet wird, das unter Anwendung der Norm ASTM D 885/D 885M - 10a von 2014 erhalten wird; und
**dadurch gekennzeichnet, dass**
die Summe der Dehnsteifigkeit bei 1% Dehnung der zweiten Stränge (52) Sc höher als die Dehnsteifigkeit bei 1% Dehnung des ersten Strangs (50) Sa ist.

2. Verfahren nach Anspruch 1, wobei:
- das unbehandelte fadenförmige textile Verstärkungselement mit der äußeren Schicht aus der thermisch vernetzbaren Klebstoffzusammensetzung beschichtet wird,
- das mit der äußeren Schicht beschichtete unbehandelte fadenförmige textile Verstärkungselement derart thermisch behandelt wird, dass die Klebstoffzusammensetzung vernetzt und so das haftverbundene fadenförmige textile Verstärkungselement (48) erhalten wird,
wobei in dem Verfahren die Schritte zum Beschichten mit und thermischen Behandeln der äußeren Schicht des unbehandelten fadenförmigen textilen Verstärkungselements derart durchgeführt werden, dass bei einer Dehnung von 30% der Bruchdehnung des unbehandelten fadenförmigen textilen Verstärkungselements der Tangentenmodul des haftverbundenen fadenförmigen textilen Verstärkungselements (48) bezogen auf das unbehandelte fadenförmige textile Verstärkungselement erhöht wird.

3. Verfahren nach Anspruch 1, wobei:
- das unbehandelte fadenförmige textile Verstärkungselement mit einer Zwischenschicht aus einer ersten thermisch vernetzbaren Klebstoffzusammensetzung beschichtet wird,
- das mit der Zwischenschicht beschichtete unbehandelte fadenförmige textile Verstärkungselement derart thermisch behandelt wird, dass die erste Klebstoffzusammensetzung vernetzt und so das zur Haftverbindung vorbehandelte fadenförmige textile Verstärkungselement erhalten wird,
- das zur Haftverbindung vorbehandelte fadenförmige textile Verstärkungselement mit der äußeren Schicht aus einer zweiten thermisch vernetzbaren Klebstoffzusammensetzung beschichtet wird,
- das zur Haftverbindung vorbehandelte fadenförmige textile Verstärkungselement, das mit der äußeren Schicht beschichtet ist, derart thermisch behandelt wird, dass die zweite Klebstoffzusammensetzung vernetzt und so das haftverbundene fadenförmige textile Verstärkungselement (48) erhalten wird,
wobei in dem Verfahren die Schritte zum Beschichten mit und thermischen Behandeln der äußeren Schicht des zur Haftverbindung vorbehandelten fadenförmigen textilen Verstärkungselements derart durchgeführt werden, dass bei einer Dehnung von 30% der Bruchdehnung des unbehandelten fadenförmigen textilen Verstärkungselements der Tangentenmodul des haftverbundenen fadenförmigen textilen Verstärkungselements (48) bezogen auf das Tangentenmodul des unbehandelten fadenförmigen textilen Verstärkungselements erhöht wird.

4. Verfahren nach einem der vorhergehenden Ansprüche, wobei der Tangentenmodul des haftverbundenen fadenförmigen textilen Verstärkungselements (48) durch Aufbringen, während des Schritts zum thermischen Behandeln der äußeren Schicht, einer Behandlungsspannung T_{T2} von größer gleich einer Standardvorspannung auf das fadenförmige textile Verstärkungselement umfasst.

5. Verfahren nach einem der vorhergehenden Ansprüche, wobei, wenn der Kern einen Titer Ta aufweist, der Tangentenmodul des haftverbundenen fadenförmigen textilen Verstärkungselements (48) erhöht wird, indem während des Schritts zum thermischen Behandeln der äußeren Schicht eine derartige Behandlungsspannung T_{T2} aufgebracht wird, dass T_{T2}/Ta ≥ 3 cN/tex, vorzugsweise T_{T2}/Ta ≥ 6 cN/tex, bevorzugter T_{T2}/Ta ≥ 10 cN/tex und noch bevorzugter T_{T2}/Ta ≥ 20 cN/tex.

6. Verfahren nach einem der vorhergehenden Ansprüche, wobei, wenn die Schicht einen Titer Tc aufweist, der Tangentenmodul des haftverbundenen fadenförmigen textilen Verstärkungselements (48) erhöht wird, indem während des Schritts zum thermischen Behandeln der äußeren Schicht eine derartige Behandlungsspannung T_{T2} aufgebracht wird, dass T_{T2}/Tc ≤ 10 cN/tex, vorzugsweise T_{T2}/Tc ≤ 7 cN/tex, bevorzugter T_{T2}/Tc ≤ 5 cN/tex und noch bevorzugter T_{T2}/Tc ≤ 4 cN/tex.

7. Verfahren nach einem der vorhergehenden Ansprüche, wobei die Schritte zum Beschichten mit und thermischen Behandeln der äußeren Schicht des unbehandelten oder des zur Haftverbindung vorbehandelten Verstärkungselements derart durchgeführt werden, dass bei einer Dehnung von 20% der Bruchdehnung des unbehandelten fadenförmigen textilen Verstärkungselements der Tangentenmodul des haftverbundenen fadenförmigen textilen Verstärkungselements (48) bezogen auf den Tangentenmodul des unbehandelten fadenförmigen textilen Verstärkungselements erhöht wird.

8. Verfahren nach einem der vorhergehenden Ansprüche, wobei, da das haftverbundene fadenförmige textile Verstärkungselement eine Bruchdehnung von größer gleich 6 % aufweist und das unbehandelte fadenförmige textile Verstärkungselement eine Bruchdehnung von größer gleich 6 % aufweist, die Schritte zum Beschichten mit und thermischen Behandeln der äußeren Schicht des unbehandelten oder des zur Haftverbindung vorbehandelten Verstärkungselements derart durchgeführt werden, dass der Tangentenmodul bei 6 % Dehnung des haftverbundenen fadenförmigen textilen Verstärkungselements (48) bezogen auf den Tangentenmodul bei 6 % Dehnung des unbehandelten fadenförmigen textilen Verstärkungselements erhöht wird.

9. Verfahren nach einem der vorhergehenden Ansprüche, wobei, da das haftverbundene fadenförmige textile Verstärkungselement eine Bruchdehnung von größer gleich 4 % aufweist und das unbehandelte fadenförmige textile Verstärkungselement eine Bruchdehnung von größer gleich 4 % aufweist, die Schritte zum Beschichten mit und thermischen Behandeln der äußeren Schicht des unbehandelten oder des zur Haftverbindung vorbehandelten Verstärkungselements derart durchgeführt werden, dass der Tangentenmodul bei 4 % Dehnung des haftverbundenen fadenförmigen textilen Verstärkungselements (48) bezogen auf den Tangentenmodul bei 4 % Dehnung des unbehandelten fadenförmigen textilen Verstärkungselements erhöht wird.

10. Verfahren nach einem der vorhergehenden Ansprüche, wobei, da das haftverbundene fadenförmige textile Verstärkungselement eine Bruchdehnung von größer gleich 2 % aufweist und das unbehandelte fadenförmige textile Verstärkungselement eine Bruchdehnung von größer gleich 2 % aufweist, die Schritte zum Beschichten mit und thermischen Behandeln der äußeren Schicht des unbehandelten oder des zur Haftverbindung vorbehandelten Verstärkungselements derart durchgeführt werden, dass der Tangentenmodul bei 2 % Dehnung des haftverbundenen fadenförmigen textilen Verstärkungselements (48) bezogen auf den Tangentenmodul bei 2 % Dehnung des unbehandelten fadenförmigen textilen Verstärkungselements erhöht wird.

11. Verfahren nach einem der vorhergehenden Ansprüche, wobei das oder die Monofilamente des ersten Strangs (50) aus einem Werkstoff gefertigt ist oder sind, der aus Polyestern, aliphatischen Polyamiden und Mischungen aus Monofilamenten aus diesen Werkstoffen ausgewählt ist, vorzugsweise aus einem Werkstoff gefertigt ist oder sind, der aus aliphatischen Polyamiden ausgewählt ist, und noch bevorzugter aus Nylon 6.6 gefertigt ist oder sind.

12. Verfahren nach einem der vorhergehenden Ansprüche, wobei das oder die Monofilamente jedes zweiten Strangs (52) aus einem Werkstoff gefertigt ist oder sind, der aus aromatischen Polyamiden, aromatischen Copolyamiden, Polyketonen und Mischungen aus Monofilamenten aus diesen Werkstoffen ausgewählt ist, vorzugsweise aus einem Werkstoff gefertigt ist oder sind, der aus aromatischen Polyamiden ausgewählt ist, und noch bevorzugter aus Para-Aramid gefertigt ist oder sind.

13. Verfahren zur Herstellung eines Reifens (10), **dadurch gekennzeichnet, dass** es Folgendes umfasst:
- ein Verfahren zur Herstellung eines haftverbundenen fadenförmigen textilen Verstärkungselements (48) nach einem der vorhergehenden Ansprüche,
- einen Schritt zur Herstellung einer Lage (19), während dessen das haftverbundene fadenförmige textile Verstärkungselement (48) in einer Zusammensetzung getränkt wird, und
- einen Schritt zum Vulkanisieren eines Reifenrohlings, der die Lage umfasst, sodass der Reifen (10) erhalten wird.

## Claims

1. Method for manufacturing a bonded reinforcing textile filamentary element (48), the bonded reinforcing textile filamentary element (48) comprises:
- a core (54) made up of a first strand (50) comprising at least one monofilament, and
- a layer (58) comprising at least two second strands (52), each second strand (52) of the layer (58) comprising at least one monofilament, each second strand (52) of the layer (58) being wound in a helix around the core (54) and each second strand of the layer is wound around the core without being wound around the or the other second strands of the layer,
wherein, in said method:
- the first strand (50) of the core (54) and the second strands (52) of the layer (58) are assembled so as to form a reinforcing textile filamentary element in the natural state,
- the reinforcing filamentary element in the natural state or a pre-bonded reinforcing filamentary element is obtained,
- the reinforcing textile filamentary element in the natural state or pre-bonded reinforcing textile filamentary element is coated with an external layer of at least one heat-crosslinkable adhesive composition,
- the reinforcing textile filamentary element in the natural state or pre-bonded reinforcing textile filamentary element that is coated with the external layer is thermally treated so as to crosslink the adhesive composition in order to obtain the bonded reinforcing textile filamentary element (48),
wherein, in said method, the steps of coating with and of thermally treating the external layer of the reinforcing textile filamentary element in the natural state or pre-bonded reinforcing textile filamentary element are carried out such that, for an elongation equal to 30% of the elongation at break of the reinforcing textile filamentary element in the natural state, the tangent modulus of each bonded reinforcing textile filamentary element (48) is increased compared with the tangent modulus of the reinforcing textile filamentary element in the natural state, with the tangent modulus is calculated on the basis of a force-elongation curve obtained by applying the standard ASTM D 885/D 885M - 10a of 2014 and **characterized in that** the sum of the stiffnesses in tension at 1% elongation of the second strands (52) Sc, is greater than the stiffness in tension at 1% elongation of the first strand (50) Sa.

2. Method according to Claim 1, wherein:
- the reinforcing textile filamentary element in the natural state is coated with the external layer of the heat-crosslinkable adhesive composition,
- the reinforcing textile filamentary element in the natural state that is coated with the external layer is thermally treated so as to crosslink the adhesive composition in order to obtain the bonded reinforcing textile filamentary element (48),
wherein, in said method, the steps of coating with and of thermally treating the external layer of the reinforcing textile filamentary element in the natural state are carried out such that, for an elongation equal to 30% of the elongation at break of the reinforcing textile filamentary element in the natural state, the tangent modulus of the bonded reinforcing textile filamentary element (48) is increased compared with the tangent modulus of the reinforcing textile filamentary element in the natural state.

3. Method according to Claim 1, wherein:
- the reinforcing textile filamentary element in the natural state is coated with an intermediate layer of a first heat-crosslinkable adhesive composition,
- the reinforcing textile filamentary element in the natural state that is coated with the intermediate layer is thermally treated so as to crosslink the first adhesive composition in order to obtain the pre-bonded reinforcing textile filamentary element,
- the pre-bonded reinforcing textile filamentary element is coated with the external layer of a second heat-crosslinkable adhesive composition,
- the pre-bonded reinforcing textile filamentary element that is coated with the external layer is thermally treated so as to crosslink the second adhesive composition in order to obtain the bonded reinforcing textile filamentary element (48),
wherein, in said method, the steps of coating with and of thermally treating the external layer of the pre-bonded reinforcing textile filamentary element are carried out such that, for an elongation equal to 30% of the elongation at break of the reinforcing textile filamentary element in the natural state, the tangent modulus of the bonded reinforcing textile filamentary element (48) is increased compared with the tangent modulus of the reinforcing textile filamentary element in the natural state.

4. Method according to any one of the preceding claims, wherein the tangent modulus of the bonded reinforcing textile filamentary element (48) is increased by applying, during the step of thermally treating the external layer, a treatment tension T_{T2} greater than a standard pretension to the textile filamentary element.

5. Method according to any one of the preceding claims, wherein, with the core having a count Ta, the tangent modulus of the bonded reinforcing textile filamentary element (48) is increased by applying, during the step of thermally treating the external layer, a treatment tension T_{T2} such that T_{T2}/Ta ≥ 3 cN/tex, preferably T_{T2}/Ta ≥ 6 cN/tex, more preferably T_{T2}/Ta ≥ 10 cN/tex and even more preferably T_{T2}/Ta ≥ 20 cN/tex.

6. Method according to any one of the preceding claims, wherein, with the layer having a count Tc, the tangent modulus of the bonded reinforcing textile filamentary element (48) is increased by applying, during the step of thermally treating the external layer, a treatment tension T_{T2} such that T_{T2}/Tc ≤ 10 cN/tex, preferably T_{T2}/Tc ≤ 7 cN/tex, more preferably T_{T2}/Tc ≤ 5 cN/tex and even more preferably T_{T2}/Tc ≤ 4 cN/tex.

7. Method according to any one of the preceding claims, wherein the steps of coating with and of thermally treating the external layer of the reinforcing element in the natural state or pre-bonded reinforcing element are carried out such that, for an elongation equal to 20% of the elongation at break of the reinforcing textile filamentary element in the natural state, the tangent modulus of the bonded reinforcing textile filamentary element (48) is increased compared with the tangent modulus of the reinforcing textile filamentary element in the natural state.

8. Method according to any one of the preceding claims, wherein, with the bonded reinforcing textile filamentary element having an elongation at break greater than or equal to 6% and the reinforcing textile filamentary element in the natural state having an elongation at break greater than or equal to 6%, the steps of coating with and of thermally treating the external layer of the reinforcing element in the natural state or pre-bonded reinforcing element are carried out such that the tangent modulus at 6% elongation of the bonded reinforcing textile filamentary element (48) is increased compared with the tangent modulus at 6% elongation of the reinforcing textile filamentary element in the natural state.

9. Method according to any one of the preceding claims, wherein, with the bonded reinforcing textile filamentary element having an elongation at break greater than or equal to 4% and the reinforcing textile filamentary element in the natural state having an elongation at break greater than or equal to 4%, the steps of coating with and of thermally treating the external layer of the reinforcing element in the natural state or pre-bonded reinforcing element are carried out such that the tangent modulus at 4% elongation of the bonded reinforcing textile filamentary element (48) is increased compared with the tangent modulus at 4% elongation of the reinforcing textile filamentary element in the natural state.

10. Method according to any one of the preceding claims, wherein, with the bonded reinforcing textile filamentary element having an elongation at break greater than or equal to 2% and the reinforcing textile filamentary element in the natural state having an elongation at break greater than or equal to 2%, the steps of coating with and of thermally treating the external layer of the reinforcing element in the natural state or pre-bonded reinforcing element are carried out such that the tangent modulus at 2% elongation of the bonded reinforcing textile filamentary element (48) is increased compared with the tangent modulus at 2% elongation of the reinforcing textile filamentary element in the natural state.

11. Method according to any one of the preceding claims, wherein the monofilament(s) of the first strand (50) is or are made of a material selected from polyesters, aliphatic polyamides and mixtures of monofilaments of these materials, preferably made of a material selected from aliphatic polyamides and more preferably made of nylon 6.6.

12. Method according to any one of the preceding claims, wherein the monofilament(s) of each second strand (52) is or are made of a material selected from aromatic polyamides, aromatic copolyamides, polyketones and mixtures of monofilaments of these materials, preferably made of a material selected from aromatic polyamides and more preferably made of para-aramid.

13. Method for manufacturing a tyre (10), **characterized in that** it comprises
- a method for manufacturing a bonded reinforcing textile filamentary element (48) according to any one of the preceding claims,
- a step of manufacturing a ply (19), during which the bonded reinforcing textile filamentary element (48) is embedded in a composition, and
- a step of curing a green form of the tyre comprising the ply so as to obtain the tyre (10).
